# EUROPEAN PATENT APPLICATION

(11) **EP 4 478 230 A1**
(43) Date of publication of application: **18.12.2024**
(21) Application number: 23752333.7
(22) Date of filing: 07.02.2023
(51) Int. Cl.: G06F 21/60

(54) **DATA INTERACTION METHOD AND SYSTEM**

(30) Priority: 08.02.2022 CN 202210123150; 04.03.2022 CN 202210214304; 16.06.2022 CN 202210695560
(71) Applicant: Greenworks (Jiangsu) Co., Ltd., Changzhou, Jiangsu 213023 (CN)
(72) Inventor: CUI, Yang, Changzhou, Jiangsu 213023 (CN); ZHU, Yanliang, Changzhou, Jiangsu 213023 (CN); ZHUANG, Xian, Changzhou, Jiangsu 213023 (CN)
(74) Representative: Bergenstråhle & Partners AB
(86) International application number: PCT/CN2023/074757
(87) International publication number: WO 2023/151553

(57) **Abstract**

A data interaction method and a system are applied for a data interaction between a battery pack and a power tool sharing a same physical communication channel for communication. One of the battery pack and the power tool has at least one communication mode and the other has at least two communication modes. When interacting data, the battery pack and the power tool perform an initial handshake communication. When the handshake communication between the battery pack and the power tool fails, one of the battery pack and the power tool with two communication modes switches a current communication mode to another communication mode. The battery pack and the power tool perform a secondary handshake communication. After the secondary handshake communication between the battery pack and the power tool is successful, the battery pack and the power tool transmit data to each other.

## Description

### CROSS REFERENCE TO RELATED APPLICATION

The present application is a continuation Application of PCT application No. PCT/CN2023/074757 filed on February 7, 2023, which claims the benefit of CN202210695560.8 filed on June 16, 2022, CN202210214304.2 filed on March 4, 2022, and CN202210123150.6 filed on February 8, 2022. All the above are hereby incorporated by reference for all purposes.

### TECHNICAL FIELD

The disclosure relates to a field of communication technology, and in particular to a data interaction method and a system.

### BACKGROUND

With the continuous development of technology, the continuous enrichment of product lines, and the continuous evolution of networking and intelligence, the amount of data communicated between battery packs and power tools is also growing rapidly. The original single bus communication protocol cannot meet the current communication requirements between battery packs and power tools, which greatly limits the improvement of product functions and experience.

Although the new communication mode can meet the transmission requirements of large amounts of data, in order to be compatible with the iteration between new and old products, a plurality of different communication modes will coexist between the battery pack and/or the power tool. And due to the limitations of physical communication channels, the plurality of the communication modes share the same physical communication channel, which may cause communication failure and tool downtime due to the different communication modes used by the battery pack and the power tool during a communication connection.

In addition, the original communication mode that the battery pack and the power tool use a single bus high-low level, may cause that it is easy for people to intercept the communication content and perform a brute force cracking, thereby easily imitating the company's battery pack products.

### SUMMARY

One or more embodiments of the disclosure provide a data interaction method and a system thereof to solve a problem such as communication failure and tool shutdown caused by different communication modes used by a battery pack and a power tool during a communication connection in cases where a plurality of different communication modes coexist between the conventional battery pack and/or the power tool and the battery pack and the power tool share a same physical communication channel.

One or more embodiments of the disclosure provide the data interaction method, which is applied to interact data between the battery pack and the power tool. The battery pack and the power tool share the same physical communication channel for communication, one of the battery pack and the power tool has at least one communication mode and the other has at least two of the battery pack and the power tool communication modes.

The data interaction method includes:
the battery pack performing a handshake communication between the battery pack and the power tool;
the battery pack or the power tool which having at least two communication modes switching a current communication mode to another communication mode if the handshake communication between the battery pack and the power tool fails;
re-performing the handshake communication between the battery pack and the power tool until the handshake communication between the battery pack and the power tool succeeds; and
the battery pack and the power tool transmitting data to each other.

In an embodiment of the disclosure, the battery pack includes one communication mode, and the power tool includes at least two communication modes.

The battery pack performing the handshake communication between the battery pack and the power tool includes:
the battery pack sending a handshake message to the power tool;
the power tool replying an agreed message is replied to the battery pack if the power tool receives the handshake message within a first preset time, and it indicates that the handshake communication between the battery pack and the power tool is successful if the battery pack receives the agreed message replied by the power tool;
determining that the handshake communication between the battery pack and the power tool fails if the power tool does not receive the handshake message within the first preset time. The power tool switches its current communication mode to another communication mode of the handshake communication between the battery pack and the power tool fails, and re-performs the handshake communication between the battery pack and the power tool until the handshake communication between the battery pack and the power tool is successful.

In an embodiment of the disclosure, the battery pack includes at least two communication modes, and the power tool includes one communication mode.

The battery pack performing the handshake communication between the battery pack and the power tool includes:
the battery pack sending the handshake message to the power tool and recording a number of sending times of the handshake message;
determining that the handshake communication between the battery pack and the power tool is successful if the battery pack receives an agreed message replied by the power tool within a preset number of sending times of the handshake message;
determining that the handshake communication between the battery pack and the power tool fails if the battery pack does not receive the agreed message replied by the power tool within the preset number of sending times of the handshake message; and
the battery pack switching its current communication mode to another communication mode if the handshake communication between the battery pack and the power tool fails, and re-performing the handshake communication between the battery pack and the power tool until the handshake communication between the battery pack and the power tool is successful.

In an embodiment of the disclosure, the battery pack and the power tool include at least two communication modes respectively.

The battery pack performing the handshake communication between the battery pack and the power tool includes:
the battery pack sending the handshake message to the power tool, and the power tool replying with the agreed message to the battery pack after receiving the handshake message;
determining that the handshake communication between the battery pack and the power tool is successful if the battery pack receives the agreed message within a second preset time, determining that the handshake communication between the battery pack and the power tool fails if the power tool does not receive the handshake message within the first preset time; and
the battery pack or the power tool switching its current communication mode to another communication mode if the handshake communication between the battery pack and the power tool fails, and re-performing the handshake communication between the battery pack and the power tool until the handshake communication between the battery pack and the power tool is successful.

In an embodiment of the disclosure, the battery pack and the power tool includes at least two communication modes respectively.

The battery pack performing the handshake communication between the battery pack and the power tool includes:
the battery pack sending the handshake message to the power tool, and the power tool replying with the agreed message to the battery pack after receiving the handshake message;
determining that the handshake communication between the battery pack and the power tool is successful if the battery pack receives the agreed message replied by the power tool twice in succession and a time interval between two receptions of the agreed message is less than a preset interval, otherwise, determining that the handshake communication between the battery pack and the electric tool fails; and
the battery pack or the power tool switching its current communication mode to another communication mode if the handshake communication between the battery pack and the power tool fails, and re-performing the handshake communication between the battery pack and the power tool until the handshake communication between the battery pack and the power tool is successful.

In an embodiment of the disclosure, the battery pack and the power tool transmitting data to each other includes:
the battery pack transmitting data with the power tool in a communication mode in which the handshake communication is successful; or
the battery pack and the power tool switching the communication mode when handshake communication is successful to another communication mode to transmit data.

In an embodiment of the disclosure, the battery pack and the power tool have at least a single bus communication mode and a serial bus communication mode respectively.

The battery pack and the power tool transmitting data to each other includes:
when the battery pack and the power tool successfully communicate by handshaking through the serial bus communication mode, the battery pack and the power tool transmitting data to each other through the serial bus communication mode if the battery pack and the power tool successfully perform the handshake communication through the serial bus communication mode; or
when the battery pack and the power tool successfully communicate by handshaking with the single bus communication mode, the battery pack and the power tool first switching the communication mode from the single bus communication mode to the serial bus communication mode, and then performing the data transmission through the serial bus communication mode if the battery pack and the power tool successfully perform the handshake communication through the single bus communication mode.

In an embodiment of the disclosure, the data interaction method further includes: after the data transmission between the battery pack and the power tool is completed, the battery pack and the power tool setting the communication mode to their respective default communication modes.

In an embodiment of the disclosure, when the battery pack performs the handshake communication with the power tool includes:
the battery pack detects the power tool connected, a first random number is generated, battery pack data and the first random number are encrypted into first handshake information according to a preset key, the first handshake information is output to the power tool;
the battery pack receives second handshake information fed back by the power tool, and the second handshake information is decrypted according to the preset key to obtain power tool data and a second random number; and
the battery pack and the power tool transmits data to each other, which includes:
   the battery pack encrypting first original data and the first random number into first data according to a preset first rule, and outputting the first data to the power tool; and
   the battery pack receiving second data fed back by the power tool, parsing the second data into second original data according to a preset second rule, and discharging according to the second original data and the power tool data.

The battery pack encrypting first original data and the first random number into first data according to the preset first rule includes:
the battery pack adding the first random number to the first original data according to a preset order; and
the battery pack encrypting the first original data added with the first random number by using a preset encryption algorithm to obtain the first data.

In an embodiment of the disclosure, the battery pack adding the first random number to the first original data according to the preset order includes:
the battery pack dividing the first random number into single bytes, and inserting each byte into the first original data according to the preset order.

In an embodiment of the disclosure, the battery pack receiving the second data fed back by the power tool, parsing the second data into the second original data according to the preset second rule includes:
the battery pack receiving the second data fed back by the power tool, and decrypting the second data into the second original data added with the second random number by using a preset decryption algorithm; and
the battery pack separates the second random number from the second original data according to the preset order to obtain the second original data.

In an embodiment of the disclosure, the data interaction method further includes:
the battery pack saving the second random number into a preset first verification table in a chronological order; and
using the second random number received this time to replace the earliest second random number in the first verification table if an amount of data in the first verification table is greater than a preset first amount.

In an embodiment of the disclosure, the data interaction method further includes:
the battery pack comparing the second random number with the data in the first verification table, considering the connected power tool to be illegally connected, and the battery pack disconnecting the communication connection with the power tool if there is same data.

In an embodiment of the disclosure, the data interaction method further includes:
the battery pack comparing the generated first random number with data in a preset second verification table, and regenerating the first random number if there is same data;
otherwise, saving the first random number generated this time into the second verification table in a chronological order, and using the first random number generated this time to replace the earliest first random number in the second verification table if an amount of data in the second verification table is greater than a preset second amount.

In an embodiment of the disclosure, an operation before the battery pack and the power tool transmitting data to each other further includes:
the power tool reading a first array in a memory of the battery pack; and
the power tool verifying the first array, and if the verification is successful, the power tool transmitting data with the battery pack, otherwise, stopping the communication connection with the battery pack.

Wherein, the power tool verifying the first array includes:
the power tool determining whether there is a preset verification character in the first array,
if yes, the power tool intercepting a first key and a first ciphertext in the first array, generating a second ciphertext according to the first key, matching the second ciphertext with the first ciphertext, and considering the verification to be successful if a match is successful.

In an embodiment of the disclosure, an operation before the battery pack and the power tool transmitting data to each other further includes:
the battery pack pre-storing the first array for verification;
the battery pack receiving a verification request sent by the power tool, and sending the first array to the power tool, wherein the verification request is triggered and sent when the battery pack detects that the power tool is connected; and
the battery pack receiving indication information from the power tool, wherein the indication information is used to indicate to the battery pack whether verification is successful, and if successful, interacting data with the power tool.

The disclosure provides another data interaction method, which is configured to interact data between the battery pack and the power tool. The battery pack and the power tool share the same physical communication channel for communication, the battery pack and the power tool have at least two communication modes.

The data interaction method includes:
the battery pack performing the handshake communication between the battery pack and the power tool through one of the communication modes; and
when the handshake communication between the battery pack and the power tool is successful, the battery pack and the power tool respectively switching the communication mode when the handshake communication is successful to another communication mode.

In an embodiment of the disclosure, the other communication mode has large data transmission capability and high transmission rate.

The disclosure provides a data interaction system. The data interaction system includes a power tool and a battery pack.

The battery pack shares the same physical communication channel with the power tool for communication.

One of the battery pack and the power tool has at least one communication mode, another of the battery pack and the power tool has at least two communication modes, and the communication units corresponding to the communication modes in the battery pack and the power tool are connected to their respective micro-control units.

The power tool and the battery pack are configured to perform data interaction in a following mode:
the battery pack performing the handshake communication between the battery pack and the power tool;
when the handshake communication between the battery pack and the power tool fails, one of the battery pack and the power tool with two communication modes switching the current communication mode to another communication mode;
re-performing the handshake communication between the battery pack and the power tool until the handshake communication between the battery pack and the power tool succeeds; and
the battery pack and the power tool transmitting data to each other.

One or more embodiments of the disclosure provide the data interaction method and the system, which is applied for the data interaction between the battery pack and the power tool. The battery pack and the power tool share the same physical communication channel for communication. One of the battery pack and the power tool has at least one communication mode and the other has at least two communication modes. When interacting data, the battery pack and the power tool perform the initial handshake communication. When the handshake communication between the battery pack and the power tool fails, one of the battery pack and the power tool with two communication modes switches the current communication mode to the other communication mode. The battery pack and the power tool perform the secondary handshake communication. After the secondary handshake communication between the battery pack and the power tool is successful, the battery pack and the power tool transmit data to each other.

One or more embodiments of this disclosure can realize a smooth switching among the plurality of the communication modes between the battery packs and the power tools under the same physical communication channel, so as to be compatible with an iteration between new and old products and ensure a normal communication between the battery packs and the power tools. At the same time, an anti-counterfeiting operation during the handshake between the battery pack and the power tool increases a difficulty of imitation and improves product competitiveness.

The data interaction method in one or more embodiments of the disclosure performs double encryptions on the data during the handshake and the communication respectively, thereby ensuring a security of the interaction data. Even if the interaction data is captured by a third party, real and valid data cannot be obtained, thus avoiding a possibility of being imitated and greatly ensuring a safety of a user.

The data interaction method in one or more embodiments of the disclosure generates the verification information and stores it in the memory of the battery pack. Before the power tool communicates with the battery pack, it first reads the verification information from the memory to verify it. Only if the verification is successful, the data interaction with the battery pack is performed. Otherwise, the communication with the battery pack is stopped, which reduces a risk of the communication content being intercepted and preventing the battery pack from being easily imitated. In addition, one or more embodiments of the disclosure realize an anti-counterfeiting function with a help of the memory, without changing a conventional circuit structure, thus reducing costs.

### BRIEF DESCRIPTION OF THE DRAWINGS

**FIG.** 1 is a schematic flowchart of a data interaction method of the disclosure.
**FIG.** 2 is a first conceptual diagram of a data interaction system according to at least one embodiment of the disclosure.
**FIG.** 3 is a first flowchart of processing a battery pack in the data interaction method according to at least one embodiment of the disclosure.
**FIG.** 4 is a first flowchart of processing a power tool in the data interaction method according to at least one embodiment of the disclosure.
**FIG.** 5 is a second conceptual diagram of the data interaction system according to at least one embodiment of the disclosure.
**FIG.** 6 is a second flowchart of processing the battery pack in the data interaction method according to at least one embodiment of the disclosure.
**FIG.** 7 is a second flowchart of processing the power tool in the data interaction method according to at least one embodiment of the disclosure.
**FIG.** 8 is a third conceptual diagram of the data interaction system according to at least one embodiment of the disclosure.
**FIG.** 9 is a third flowchart of processing the battery pack in the data interaction method according to at least one embodiment of the disclosure.
FIG. 10 is a third flowchart of processing the power tool in the data interaction method according to at least one embodiment of the disclosure.
FIG. 11 is a fourth flowchart of processing the battery pack in the data interaction method according to at least one embodiment of the disclosure.
FIG. 12 is a fourth flowchart of processing the power tool in the data interaction method according to at least one embodiment of the disclosure.
FIG. 13 is a first schematic flowchart of the data interaction method according to a fifth embodiment of the disclosure.
FIG. 14 is a schematic flowchart of generating first data according to the fifth embodiment of the disclosure.
FIG. 15 is a schematic flowchart of parsing second data according to the fifth embodiment of the disclosure.
FIG. 16 is a second schematic flowchart of the data interaction method according to the fifth embodiment of the disclosure.
FIG. 17 is a first schematic flowchart of the data interaction method according to a sixth embodiment of the disclosure.
FIG. 18 is a schematic flowchart of generating the second data according to the sixth embodiment of the disclosure.
FIG. 19 is a schematic flowchart of parsing the first data according to the sixth embodiment of the disclosure.
FIG. 20 is a second schematic flowchart of the data interaction method according to the sixth embodiment of the disclosure.
FIG. 21 is a structural block view of the data interaction system according to a seventh embodiment of the disclosure.
FIG. 22 is a structural block view of a communication anti-counterfeiting system according to an eighth embodiment of the disclosure.
FIG. 23 is a first schematic flowchart of a communication anti-counterfeiting method according to a ninth embodiment of the disclosure.
FIG. 24 is a schematic flowchart of verifying a first array according to the ninth embodiment of the disclosure.
FIG. 25 is a second schematic flowchart of the communication anti-counterfeiting method according to the ninth embodiment of the disclosure.
FIG. 26 is a schematic flowchart of the communication anti-counterfeiting method according to a tenth embodiment of the disclosure.
FIG. 27 is a first schematic flowchart of generating the first data according to the tenth embodiment of the disclosure.
FIG. 28 is a second schematic flowchart of generating the first data according to the tenth embodiment of the disclosure.

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure.

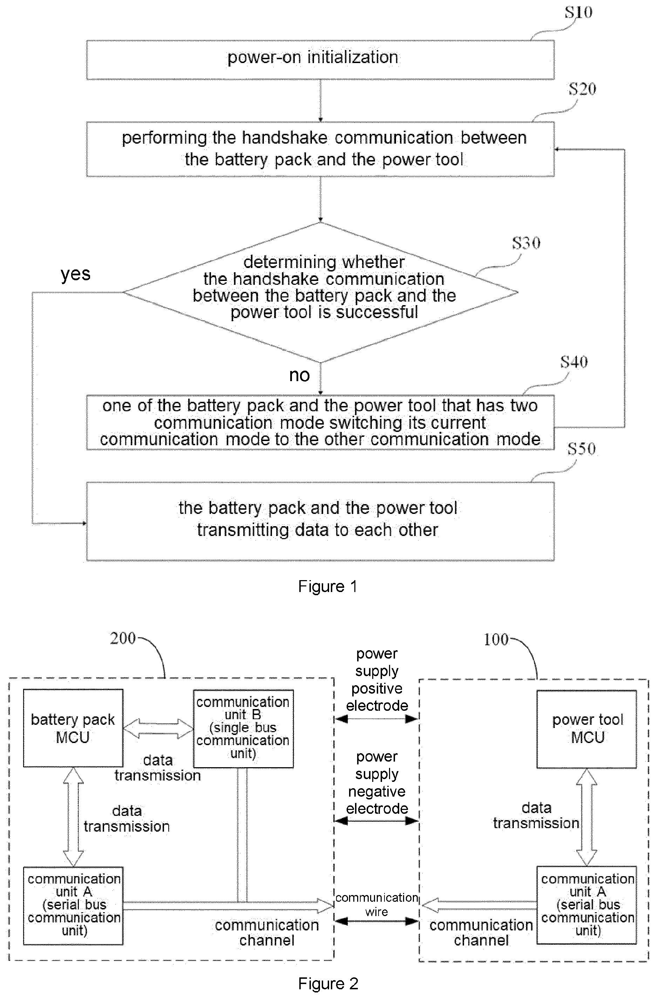

Please refer to FIG. 1 through FIG. 12. It should be noted that drawings provided in the embodiments are only illustrative of a basic idea of the disclosure. The drawings only show assemblies related to the disclosure instead of drawing according to the number, shape and size of the assemblies in actual implementation. In actual implementation, the type, quantity and ratio of each assembly may be changed at will, and a layout of the assemblies may also be more complicated.

**A** conventional SmartG battery pack 200 or a power tool uses a serial communication. Previously, the battery pack 200 or the power tool used a custom COM communication mode. In order to ensure that old power tools can use the SmartG's battery pack 200 or that the old battery pack 200 can be adapted to a tool using the SmartG, it is necessary to customize a method for smoothly switching between the COM communication and a serial port communication.

Based on this, the disclosure provides a data interaction method between the battery pack 200 and the power tool 100. Please refer to FIG. 2, FIG. 5 and FIG. 8. The battery pack 200 includes a communication unit that implements a specific communication mode, a battery pack micro-control unit (which means a battery pack MCU), and a peripheral circuit. The power tool 100 includes a communication unit that implements the specific communication mode, a tool micro-control unit (tool MCU) and a peripheral circuit. The battery pack 200 and the power tool 100 are connected with each other via a power supply positive electrode, a power supply negative electrode, and a communication wire. The battery pack 200 and the power tool 100 use the same physical communication channel for communication. One of the battery pack 200 and the power tool 100 has at least one communication mode, the other has at least two communication modes, and the communication modes in the battery pack 200 and the power tool 100 are connected to their respective micro-control units.

Please refer to FIG. 1. FIG. 1 is a schematic flowchart of the data interaction method according to an embodiment of the disclosure. The data interaction method of the embodiment of the disclosure is applied for a data interaction between the battery pack 200 and the power tool 100, which includes:

S10: power-on initialization, including a power-on initialization of the battery pack 200 and a power-on initialization of the power tool 100.

The power-on initialization of the battery pack 200 includes that after the battery pack 200 is powered on and detects the power tool 100, the communication mode of the battery pack 200 is initialized to the a default communication mode. When the battery pack 200 has only one communication mode, the communication mode of the battery pack 200 is initialized to this communication mode. When the battery pack 200 has two or more communication modes, the communication mode of the battery pack 200 may be initialized to one of them (configurable). For example, when the battery pack 200 has a single bus communication mode and a serial bus communication mode, the communication mode of the battery pack 200 may be initialized to the single bus communication mode or the serial bus communication mode, such as the single bus communication mode.

The power-on initialization of the power tool 100 includes that after the power tool 100 is powered on, the communication mode of the power tool 100 is initialized to the the default communication mode. When the power tool 100 has only one communication mode, the communication mode of the power tool 100 is initialized to this communication mode. When the power tool 100 has two or more communication modes, the communication mode of the power tool 100 may be initialized to one of them (configurable). For example, when the power tool 100 has the single bus communication mode and the serial bus communication mode, the communication mode of the power tool 100 may be initialized to the single bus communication mode or the serial bus communication mode, such as the single bus communication mode.

S20 and S30: performing the handshake communication between the battery pack 200 and the power tool 100 and determining whether the handshake communication between the battery pack 200 and the power tool 100 is successful.

Before the battery pack 200 and the power tool 100 perform a normal data transmission, the battery pack 200 performs the handshake communication with the power tool 100. Only when the handshake communication between the battery pack 200 and the power tool 100 is successful, can the process jump to S50 to execute the data transmission between the battery pack 200 and the power tool 100. Otherwise, S40 is executed.

It should be noted that, a process of the handshake communication between the battery pack 200 and the power tool 100 varies according to the number of the communication modes of the battery pack 200 and the number of the communication modes of the power tool 100, and details are described in a relevant part below.

S40: one of the battery pack 200 and the power tool 100 that has at least two communication mode switching its current communication mode to the other communication mode, and re-performing the handshake communication between the battery pack 200 and the power tool 100 until the handshake communication between the battery pack 200 and the power tool 100 is successful.

S50: the battery pack 200 and the power tool 100 transmitting data to each other, which means performing a normal transmission interaction of a communication message.

It should be noted that, in order to ensure that a communication logic of the battery pack 200 and/or the power tool 100 is consistent each time after powering on, the data interaction method further includes: after the data transmission between the battery pack 200 and the power tool 100 is completed, the battery pack 200 and the power tool 100 setting the communication mode to their respective default communication modes. When the battery pack 200 and the power tool 100 do not switch to the default communication mode during the data interaction (including during the handshake communication and the data transmission), the current communication mode should be maintained in this operation. When the battery pack 200 and the power tool 100 change the default communication mode during the data interaction (including during the handshake communication and the data transmission stages), it is necessary to switch the current communication mode between the battery pack 200 and the power tool 100 to the default communication mode between the battery pack 200 and the power tool 100. The default communication mode is a communication mode that is assumed to be executed after the battery pack 200 or the electric power tool 100 is powered on and initialized.

The data interaction method of the embodiment can realize a smooth switching among the plurality of the communication modes between the battery packs and the power tools under the same physical communication channel, so as to be compatible with an iteration between new and old products and ensure a normal communication between the battery packs and the power tools. At the same time, the data message interaction method during the handshake and a switching method of the communication mode between the battery pack and the power tool also serve as anti-counterfeiting operations, which increases a difficulty of imitation and a product competitiveness.

The data interaction method of this embodiment will be described below in combination with four different implementation methods.

FIG. 2 through FIG. 4 are a conceptual diagram of the data interaction system, a flowchart of a processing flowchart of the battery pack 200 in the data interaction method and a processing flowchart of the power tool 100 in the data interaction method in a first embodiment. FIG. 2 through FIG. 4 show the smooth switching of the communication modes during the data interaction between the battery pack 200 including at least two communication modes (of course, it is also applicable for three or more communication modes) and the power tool 100 including at least one communication mode.

Performing the handshake communication between the battery pack 200 and the power tool 100 includes: the battery pack 200 sending a handshake message to the power tool 100 and recording a number of sending times of the handshake message. When the battery pack 200 does not received an agreed message replied by the power tool 100 after sending the handshake message for a preset number of times, it means that the handshake communication between the battery pack 200 and the power tool 100 has failed. When the battery pack 200 receives the agreed message replied by the power tool 100 within a time of sending the handshake message for the preset number of times, it means that the handshake communication between the battery pack 200 and the power tool 100 is successful.

When the handshake communication between the battery pack 200 and the power tool 100 fails, the battery pack 200 switches its current communication mode to the other communication mode, and the handshake communication between the battery pack 200 and the power tool 100 is re-performed until the handshake communication between the battery pack 200 and the power tool 100 is successful.

When the handshake communication between the battery pack 200 and the power tool 100 is successful, the data transmission is then performed in the communication mode in which the handshake communication between the battery pack 200 and the power tool 100 is successful.

Please refer to FIG. 2. In an embodiment of the disclosure, the battery pack 200 includes a communication unit A (a serial bus communication unit) for implementing a communication mode A, a communication unit B (a single bus communication unit) for implementing a communication mode B, the battery pack micro-controller unit (battery pack MCU) and the peripheral circuit. The power tool 100 includes the communication unit A (the serial bus communication unit) for implementing the communication mode A, a tool micro-control unit (tool MCU) and the peripheral circuit. The battery pack 200 and the power tool 100 are connected with each other via the power supply positive electrode, the power supply negative electrode, and the communication wire. The battery pack 200 and the power tool 100 share the same physical communication channel for communication. The battery pack 200 has at least two communication modes which are the communication mode A and the communication mode B, and the power tool 100 has one communication mode which is the communication mode A.

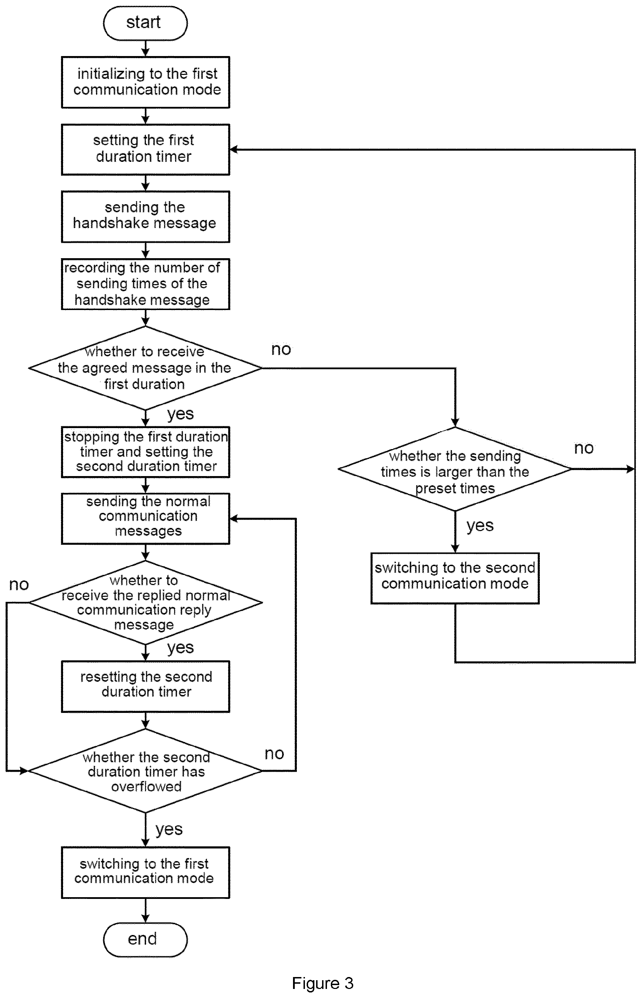

Please refer to FIG. 3. During the data interaction, a working process of the battery pack 200 includes:
S111, powering-on and initializing the battery pack 200, detecting the power tool, and initializing the communication mode to the first communication mode, such as the communication mode A;
S112, setting a first duration timer, and the battery pack 200 sending the handshake message at a period of a first duration, such as Ox12, 0x34;
S113, if the battery pack 200 receives the agreed message from the power tool 100 within the time of sending N (preset number) handshake messages, such as 0x56, 0x78, stopping the first duration timer, setting a second duration timer, sending the normal communication messages at a period of a second duration; and executing S114; if the battery pack 200 does not received the agreed message from the power tool 100 within the time of sending N (preset number) handshake message information, switching the communication mode to the second communication mode, such as the communication mode B, and returning to S112;
S114, the battery pack 200 determining whether the second duration timer has overflowed, if so, switching to the first communication mode, such as the communication mode A, and ending the current data interaction.

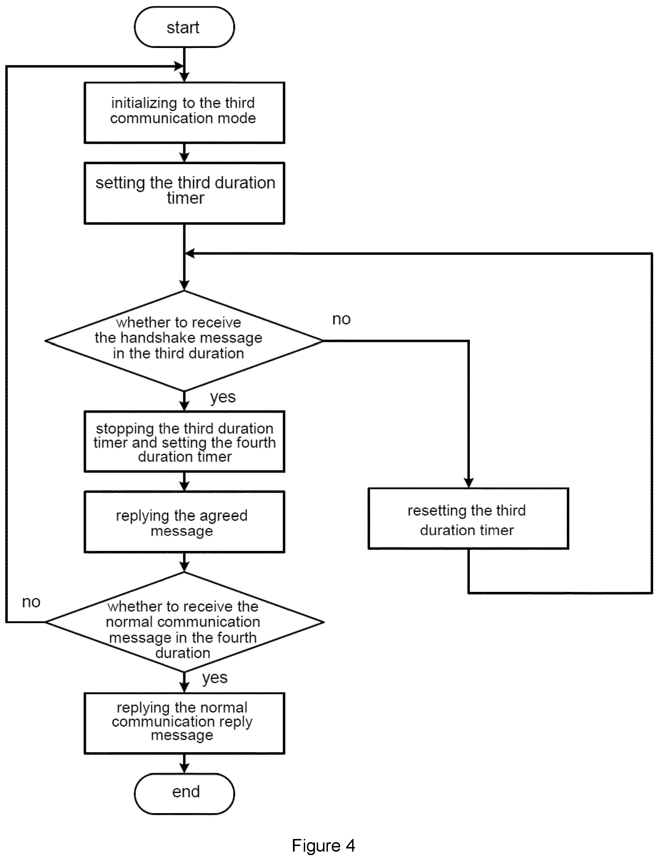

Please refer to FIG. 4. During the data interaction, a working process of the power tool 100 includes:
S121, powering-on and initializing the power tool, initializing the communication mode to a third communication mode, such as the communication mode A, wherein the third communication mode of the power tool 100 and the first communication mode of the battery pack 200 may be the same or different communication modes;
S122, setting a third duration timer, and determining whether the power tool 100 receives the handshake message within a third duration, such as Ox12, 0x34; when the power tool 100 receives the handshake message within the third duration, stopping the third duration timer, setting a fourth duration timer, and replying the agreed message, such as 0x56, 0x78, to the battery pack 200; when the power tool 100 does not receive the handshake message within the third duration, resetting the third duration timer, and continuing to determine whether the power tool 100 receives the handshake message within the duration;
S123, determining whether the power tool 100 receives the normal communication message within a fourth duration; when the power tool 100 receives the normal communication message within the fourth duration, replying with a normal communication reply message; when the power tool 100 does not receive the normal communication message within the fourth duration, ending the data interaction.

**As** mentioned above, in this embodiment, the data interaction method can realize the smooth switching between the communication modes of the power tool 100 with one communication mode and the battery pack 200 with the plurality of different communication modes under the same physical communication channel, so as to be compatible with the iteration between new and old products and ensure the normal communication between the battery packs and the power tools. At the same time, the data message interaction method during the handshake and the switching method of the communication mode between the battery pack and the power tool also serve as the anti-counterfeiting operations, which increases the difficulty of imitation and the product competitiveness.

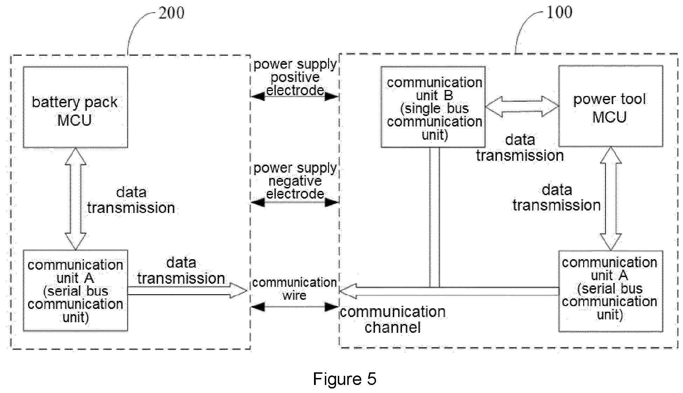

FIG. 5 through FIG. 7 are a conceptual diagram of the data interaction system, a flowchart of a processing flowchart of the battery pack 200 in the data interaction method and a processing flowchart of the power tool 100 in the data interaction method in a second embodiment. FIG. 5 through FIG. 7 show the smooth switching of the communication modes between the battery pack 200 including at least one communication mode and the power tool 100 including at least two communication modes (of course, it is also applicable for three or more communication modes).

Performing the handshake communication between the battery pack 200 and the power tool 100 includes: the battery pack 200 sending the handshake message to the power tool 100. When the power tool 100 receives the handshake message with a first preset time, it replies the agreed message to the battery pack 200. If the power tool 100 does not receive the handshake message within the first preset time, it means that the handshake communication between the battery pack 200 and the power tool 100 fails. When the battery pack 200 receives the agreed message replied by the power tool 100, it means that the handshake communication between the battery pack 200 and the power tool 100 is successful.

When the handshake communication between the battery pack 200 and the power tool 100 fails, the communication mode of power tool 100 is switched to the other communication mode, and the handshake communication between the battery pack 200 and the power tool 100 is re-performed until the handshake communication between the battery pack 200 and the power tool 100 is successful.

When the handshake communication between the battery pack 200 and the power tool 100 is successful, the data transmission is then performed in the communication mode when the handshake communication between the battery pack 200 and the power tool 100 is successful.

Please refer to FIG. 5. In an embodiment of the disclosure, the battery pack 200 includes the communication unit A (the serial bus communication unit) for implementing the communication mode A, the battery pack micro-controller unit (battery pack MCU) and the peripheral circuit. The power tool 100 includes the communication unit A (the serial bus communication unit) for implementing the communication mode A, the communication unit B (the single bus communication unit) for implementing the communication mode B, the tool micro-control unit (tool MCU) and the peripheral circuit. The battery pack 200 and the power tool 100 are connected with each other via the power supply positive electrode, the power supply negative electrode, and the communication wire. The battery pack 200 and the power tool 100 share the same physical communication channel for communication. The battery pack 200 has one communication mode which is the communication mode A, and the power tool 100 has at least two communication modes which are the communication mode A and the communication mode B.

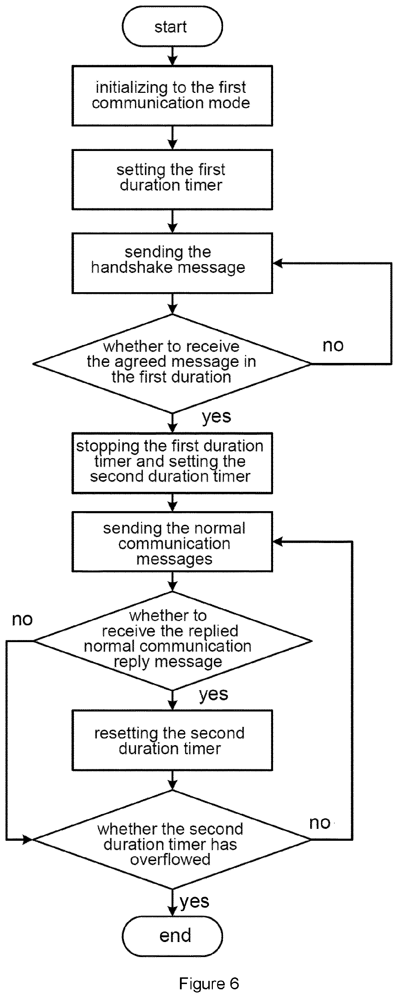

Please refer to FIG. 6. During the data interaction, the working process of the battery pack 200 includes:
S211, powering-on and initializing the battery pack 200, detecting the power tool, and initializing the communication mode to the first communication mode, such as the communication mode A;
S212, setting the first duration timer, and the battery pack 200 sending the handshake message at the period of the first duration, such as Ox12, 0x34;
S213, if the battery pack 200 receives the agreed message from the power tool 100 within the first duration, such as 0x56, 0x78, stopping the first duration timer, setting the second duration timer, sending the normal communication messages at the period of the second duration; and executing S214; if the battery pack 200 does not received the agreed message from the power tool 100 within the first duration, returning to S212;
S214, the battery pack 200 determining whether the second duration timer has overflowed, if so, stopping the data interaction, if not, continuing to send normal communication messages at the period of the second duration.

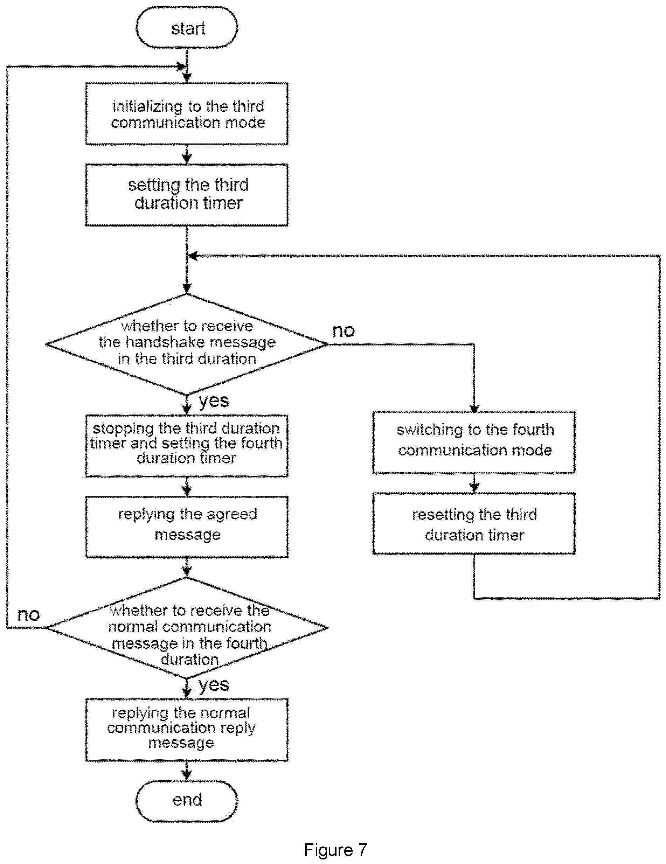

Please refer to FIG. 7. During the data interaction, the working process of the power tool 100 includes:
S221, powering-on and initializing the power tool, initializing the communication mode to the third communication mode, such as the communication mode A, of course, the third communication mode of the power tool 100 and the first communication mode of the battery pack 200 may be the same or different communication modes;
S222, setting the third duration timer, and determining whether the power tool 100 receives the handshake message within the third duration (which means the first preset time), such as Ox12, 0x34; when the power tool 100 receives the handshake message within the third duration and the verification is successful, stopping the third duration timer, setting the fourth duration timer, replying the agreed message, such as 0x56, 0x56, 0x78, to the battery pack 200, and executing S224; when the power tool 100 does not receive the handshake message within the third duration, executing 3;
S223, the power tool 100 switching the third communication mode to the fourth communication mode, for example, if the current communication mode is the communication mode A, switching the communication mode to the communication mode B, resetting the third duration timer, and executing S221;
S224, when the power tool 100 receives the handshake message within the third duration and the verification is successfully, replying to the battery pack 200 with the normal communication reply message and reinstalling the fourth duration timer; if no message is received within the third duration, executing S221.

As mentioned above, in this embodiment, the data interaction method can realize the smooth switching between the communication modes of the battery pack 200 with one communication mode and the power tool 100 with the plurality of different communication modes under the same physical communication channel, so as to be compatible with the iteration between new and old products and ensure the normal communication between the battery packs and the power tools. At the same time, the data message interaction method during the handshake and the switching method of the communication mode between the battery pack and the power tool also serve as the anti-counterfeiting operations, which increases the difficulty of imitation and the product competitiveness.

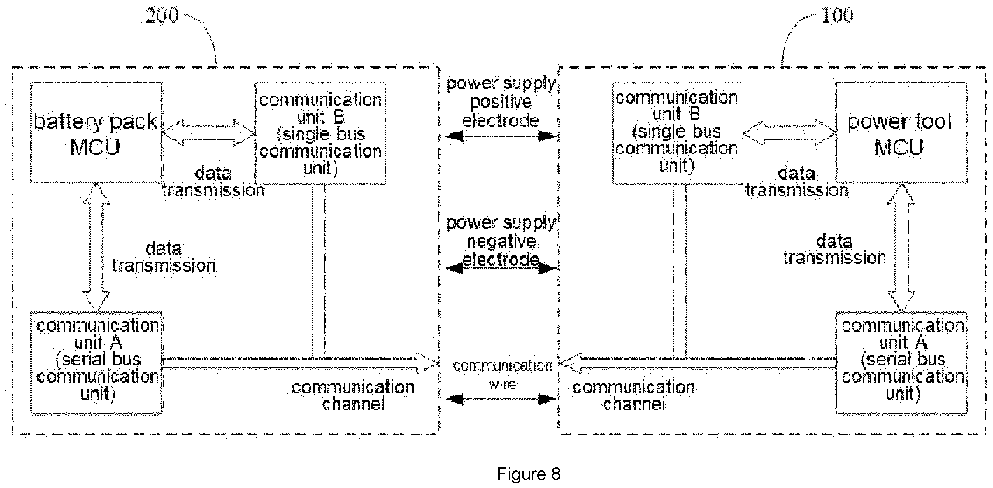

FIG. 8 through FIG. 10 are a conceptual diagram of the data interaction system, a flowchart of a processing flowchart of the battery pack 200 in the data interaction method and a processing flowchart of the power tool 100 in the data interaction method in a third embodiment. FIG. 8 through FIG. 10 show the smooth switching of the communication modes between the battery pack 200 including at least two communication modes (of course, it is also applicable for three or more communication modes) and the power tool 100 including at least two communication modes (of course, it is also applicable for three or more communication modes).

Performing the handshake communication between the battery pack 200 and the power tool 100 includes: the battery pack 200 sending the handshake message to the power tool 100. When the power tool 100 receives the handshake message, it replies the agreed message to the battery pack 200. If the battery pack 200 receives the agreed message within a second preset time, it means that the handshake communication between the battery pack 200 and the power tool 100 is successful. When the power tool 100 does not receive the handshake message within the first preset time, it means that the handshake communication between the battery pack 200 and the power tool 100 fails. When the handshake communication between the battery pack 200 and the power tool 100 fails, the first embodiment described above may be used to switch the current communication mode of the battery pack 200 to the other communication mode, or the second embodiment may be used to switch the current communication mode of the power tool 100 to the other communication mode, and the handshake communication between the battery pack 200 and the power tool 100 is re-performed until the handshake communication between the battery pack 200 and the power tool 100 is successful. When the handshake communication between the battery pack 200 and the power tool 100 is successful, the data transmission is then performed in the communication mode in which the handshake communication between the battery pack 200 and the power tool 100 is successful.

Perform ing the data transmission between the battery pack 200 and the power tool 100 includes: the battery pack 200 and the power tool 100 performing the data transmission in the communication mode through which the handshake communication is successful; or the battery pack 200 and the power tool 100 switching the communication mode when the handshake communication is successful to the other communication mode for data transmission.

Please refer to FIG. 8. In an embodiment of the disclosure, the battery pack 200 includes the communication unit A (the serial bus communication unit) for implementing the communication mode A, the communication unit B (the single bus communication unit) for implementing the communication mode B, the battery pack micro-controller unit (battery pack MCU) and the peripheral circuit. The power tool 100 includes the communication unit A (the serial bus communication unit) for implementing the communication mode A, the communication unit B (the single bus communication unit) for implementing the communication mode B, the tool micro-control unit (tool MCU) and the peripheral circuit. The battery pack 200 and the power tool 100 are connected with each other via the power supply positive electrode, the power supply negative electrode, and the communication wire. The battery pack 200 and the power tool 100 share the same physical communication channel for communication. The battery pack 200 has at least two communication modes which are the communication mode A and the communication mode B, and the power tool 100 has at least two communication modes which are the communication mode A and the communication mode B.

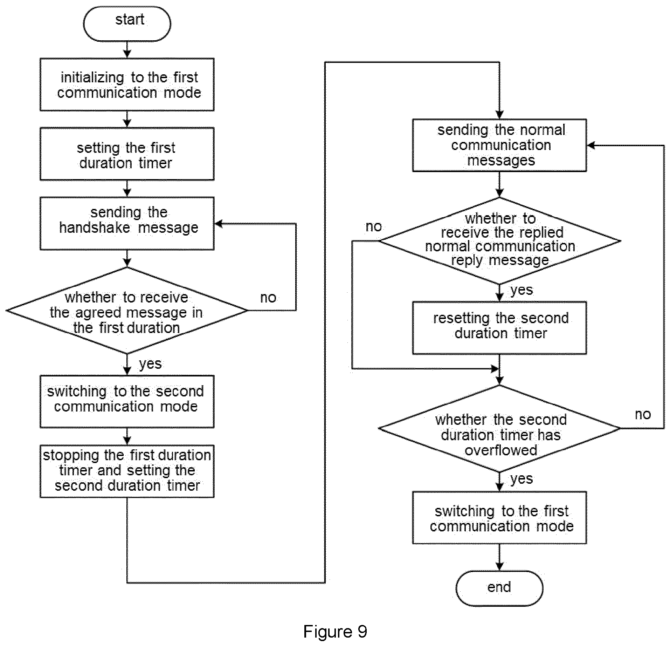

Please refer to FIG. 9. During the data interaction, the working process of the battery pack 200 includes:
S311, powering-on and initializing the battery pack 200, detecting the power tool, and initializing the communication mode to the first communication mode, such as the communication mode B (of course it may also be the communication mode A);
S312, setting the first duration timer, and the battery pack 200 sending the handshake message at the period of the first duration, such as Ox12, 0x34;
S313, if the battery pack 200 receives the agreed message from the power tool 100 within the first duration (which means the second preset time), such as 0x56, 0x78, switching to the second communication mode, such as the communication mode A, stopping the first duration timer, setting the second duration timer, and sending the normal communication messages at the period of the second duration;
S314, if the battery pack 200 receives and successfully verifies the normal communication reply message replied by the power tool 100 within the second duration, resetting the second duration timer; if no message is received within the second duration, switching the communication mode to the first communication mode, such as the communication mode B, and starting from S312 to run.

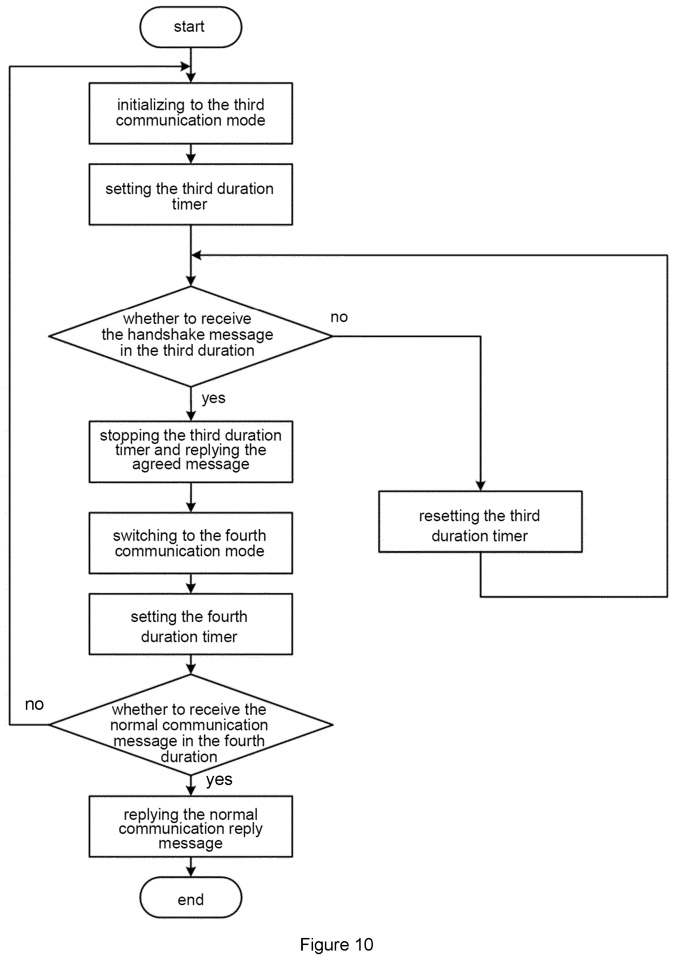

Please refer to FIG. 10. During the data interaction, the working process of the power tool 100 includes:
S321, powering-on and initializing the power tool, initializing the communication mode to the third communication mode, such as the communication mode B (of course, it may also be the communication mode A), wherein the third communication mode of the power tool 100 and the first communication mode of the battery pack 200 may be the same or different communication modes;
S322, setting the third duration timer, determining whether the power tool 100 receives the handshake message within the third duration (which means the first preset time), such as Ox12, 0x34, and successfully verifying; when the power tool 100 receives the handshake message within the third duration and the verification is successful, stopping the third duration timer, replying the agreed message, such as 0x56, 0x56, 0x7, to the battery pack 200, and at the same time, replacing the communication mode, which means replacing the third communication mode by the fourth communication mode, for example, if the current communication mode is communication mode B, switching the current communication mode to the communication mode A;
S323, setting the fourth duration timer;
S324, if the power tool 100 receives and successfully verifies the normal communication message sent by the battery pack 200 within the fourth duration, reloading the four-time period timer; if the power tool 100 does not receive any message within the fourth duration, starting from 1 to run.

As mentioned above, in this embodiment, since the single bus communication mode cannot meet transmission requirements of large amounts of data, after the battery pack 200 and the power tool 100 successfully handshake through the single bus communication mode, it is necessary to switch to a serial bus communication mode that can meet the transmission requirements of the large amounts of data to perform an interactive communication of the large amounts of data and improve data transmission efficiency. By switching this communication method, it is possible to be compatible with the iteration between new and old products, which realizes the smooth switching between the communication modes of the power tool 100 and the battery pack 200 under the same physical communication channel, so as to be compatible with the iteration between new and old products and ensure the normal communication between the battery packs and the power tools. At the same time, the data message interaction method during the handshake and the switching method of the communication mode between the battery pack and the power tool also serve as the anti-counterfeiting operations, which increases the difficulty of imitation and the product competitiveness.

The data interaction method of the third embodiment is susceptible to a communication interference, and data transmission errors may occur (for example, after an power tool receives the handshake message of 0x12, 0x34, it replies to the battery pack 200 with the agreed message of 0x56, 0x78, then the power tool switches the communication mode A to the communication mode B, however, at this time, the power tool replies to the battery pack 200 with the agreed message of 0x56, 0x78, but for some reason, it is not successfully recognized by the battery pack 200, so the battery pack 200 is still in the communication mode A), which does not guarantee that a communication switching is 100% successful. There may be a case that the battery pack 200 is in the communication mode A, while the power tool is in the communication mode B, which means that the two are not in the same communication mode. Due to a failure of communication, the device stops running, which affect user's experience.

Therefore, this embodiment further provides the data interaction method in which the plurality of the communication modes coexist in the same channel without the communication interference, as a fourth embodiment of the data interaction method.

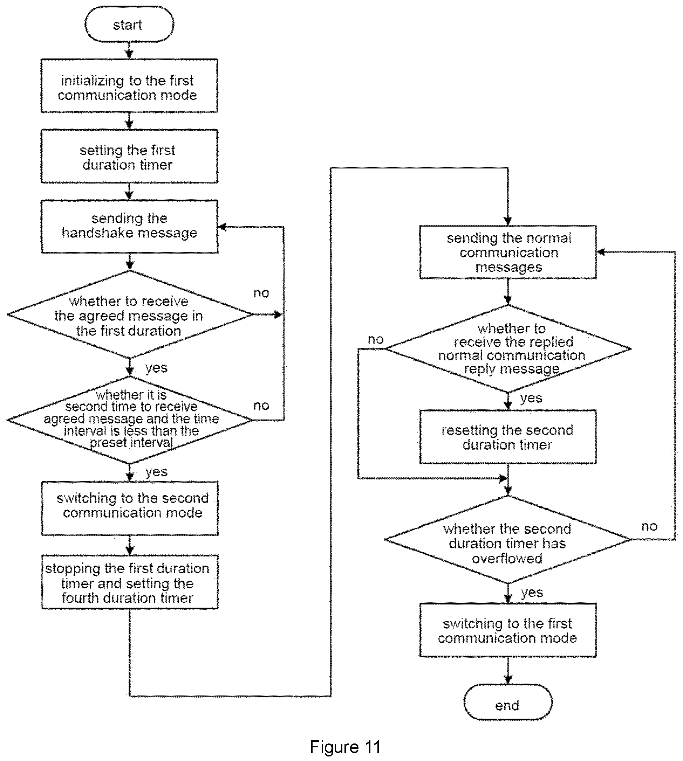

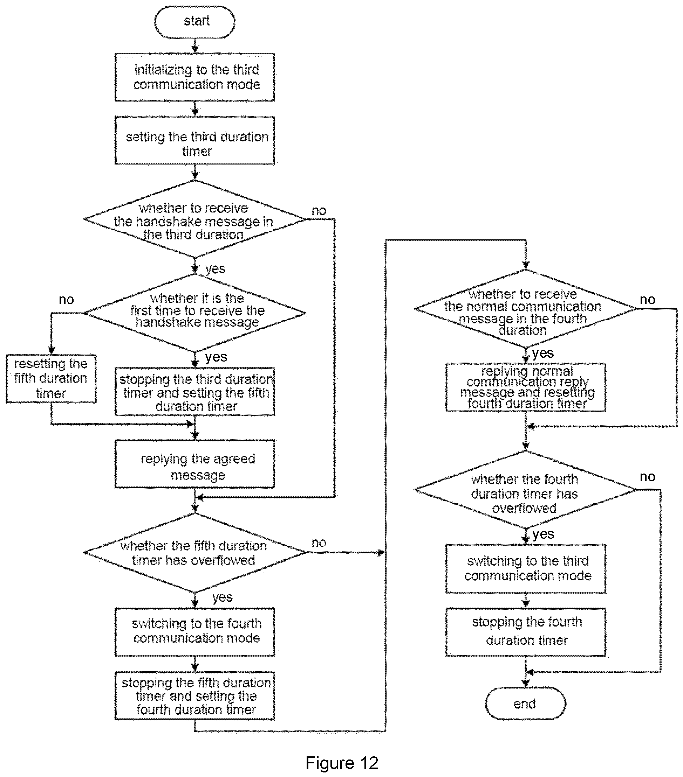

FIG. 11 and FIG. 12 shows a processing flowchart of the battery pack 200 in the data interaction method and a processing flowchart of the power tool 100 in the data interaction method in a fourth embodiment. In one or more embodiments, a conceptual diagram of the data interaction system according to the fourth embodiment is shown in FIG. 8. FIG. 8, FIG. 11 and FIG. 12 show the smooth switching of the communication modes between the battery pack 200 including at least two communication modes (of course, it is also applicable for the battery pack 200 including three or more communication modes) and the power tool 100 including at least two communication modes (of course, it is also applicable for the power tool 100 including three or more communication modes).

The battery pack 200 performing the handshake communication between the battery pack and the power tool 100 includes: the battery pack 200 sending the handshake message to the power tool 100, the power tool 100 receiving the handshake message and then replying with the agreed message to the battery pack 200. When the battery pack 200 receives the agreed message replied by the power tool 100 twice in succession, and a time interval between two receptions of the agreed message is less than a preset interval, it indicates that the handshake communication between the battery pack 200 and the power tool 100 is successful. Otherwise, it indicates that the handshake communication between the battery pack 200 and the power tool 100 has failed. When the handshake communication between the battery pack 200 and the power tool 100 fails, the first embodiment described above may be used to switch the current communication mode of the battery pack 200 to the other communication mode, or the second embodiment may be used to switch the current communication mode of the power tool 100 to the other communication mode, and the handshake communication between the battery pack 200 and the power tool 100 is re-performed until the handshake communication between the battery pack 200 and the power tool 100 is successful. When the handshake communication between the battery pack 200 and the power tool 100 is successful, the data transmission is then performed in the communication mode when the handshake communication between the battery pack 200 and the power tool 100 is successful. During the handshake, adding a determination that the battery pack receives the agreed message replied by the power tool twice in succession and the time between the two receptions of the agreed message is less than the preset interval may increase an anti-interference ability between the battery pack and the power tool, reduce the data transmission errors, and improve the user's experience.

The data transmission between the battery pack 200 and the power tool 100 includes: the battery pack 200 and the power tool 100 performing the data transmission in the communication mode through which the handshake communication is successful; or the battery pack 200 and the power tool 100 switching the communication mode through which the handshake communication is successful to the other communication mode for data transmission.

For example, the battery pack 200 and the power tool 100 at least have the single bus communication mode and the serial bus communication mode respectively. When the handshake communication between the battery pack 200 and the power tool 100 is successfully through the serial bus communication mode, the battery pack 200 and the power tool 100 transmit data through the serial bus communication mode. When the handshake communication between the battery pack 200 and the power tool 100 is successfully through the single bus communication mode, the battery pack 200 and the power tool 100 first switch the communication mode from the single bus communication mode to the serial bus communication mode, and then transmit data through the serial bus communication mode.

Please refer to FIG. 8. In an embodiment of the disclosure, the battery pack 200 includes the communication unit A (the serial bus communication unit) for implementing the communication mode A, the communication unit B (the single bus communication unit) for implementing the communication mode B, the battery pack micro-controller unit (battery pack MCU) and the peripheral circuit. The power tool 100 includes the communication unit A (the serial bus communication unit) for implementing the communication mode A, the communication unit B (the single bus communication unit) for implementing the communication mode B, the tool micro-control unit (tool MCU) and the peripheral circuit. The battery pack 200 and the power tool 100 are connected with each other via the power supply positive electrode, the power supply negative electrode, and the communication wire. The battery pack 200 and the power tool 100 share the same physical communication channel for communication. The battery pack 200 has at least two communication modes which are the communication mode A and the communication mode B, and the power tool 100 has two at least communication modes which are the communication mode A and the communication mode B.

Please refer to FIG. 10. During the data interaction, the working process of the battery pack 200 includes:
S411, powering-on and initializing the battery pack 200, detecting the power tool, and initializing the communication mode to the first communication mode, such as the communication mode B (of course it may also be the communication mode A);
S412, setting the first duration timer, and the battery pack 200 sending the handshake message at the period of the first duration, such as Ox12, 0x34;
S413, the battery pack 200 determining whether it receives the agreed message from the power tool within the first duration, such as 0x56, 0x78; if the battery pack 200 receives the agreed message replied by the power tool 100, determining whether it is a second time to receive the agreed message replied by the power tool 100 and the time interval between this time and the last time the agreed message is received is less than T milliseconds (the preset interval), if so, the battery pack 200 switching the communication mode from the communication mode B to the communication mode A, stopping the first duration timer, and setting the second duration timer; if not, returning to 2 to continue to run;
S414, after the battery pack 200 switches to the communication mode A, sending the normal communication message SSS at a period of the fourth duration;
S415, if the battery pack 200 receives and successfully verifies the normal communication reply message replied by the power tool 100 within the second duration, reloading or resetting the second duration timer; if no message is received within the second duration, the battery pack 200 then switching the communication mode from the communication mode A to the communication mode B.

Please refer to FIG. 12. During the data interaction, the working process of the power tool 100 includes:
S421, powering-on and initializing the power tool, initializing the communication mode to the third communication mode, such as the communication mode B (of course, it may also be the communication mode A), wherein the third communication mode of the power tool 100 and the first communication mode of the battery pack 200 may be the same or different communication modes;
S422, setting the third duration timer, determining whether the power tool 100 receives the handshake message within the third duration (such as Ox12, 0x34), and successfully verifying; when the power tool 100 receives the handshake message within the third duration and the verification is successful, replying the agreed message, such as 0x34, 0x45, 0x45, to the battery pack 200;
S423, when the power tool 100 receives the handshake message within the third duration and the verification is successful, the power tool 100 determining whether it is a first time to receive the handshake message sent by the battery pack 200, if yes, stopping the third duration timer and setting a fifth duration timer; if not, resetting the fifth duration timer;
S424, the power tool 100 determining whether the fifth duration timer has overflowed, if yes, the power tool 100 switching the third communication mode to the fourth communication mode, for example, switching the current communication mode from the communication mode A to the communication mode B, stopping the fifth duration timer and setting the fourth duration timer;
S425, when the power tool 100 is in the communication mode A and receives the normal communication message sent by the battery pack 200, replying with the normal communication reply message and resetting the fourth duration timer;
S426, the power tool 100 determining whether the fourth duration timer has overflowed, if yes, the power tool 100 switching the fourth communication mode to the third communication mode, and at the same time stopping the fourth duration timer.

As mentioned above, in this embodiment, since the single bus communication mode cannot meet the transmission requirements of the large amounts of data, after the battery pack 200 and the power tool 100 successfully handshake through the single bus communication mode, it is necessary to switch to the serial bus communication mode that can meet the transmission requirements of the large amounts of data to perform the interactive communication of the large amounts of data and improve the data transmission efficiency. By switching in this communication method, it is possible to be compatible with the iteration between the new and old products, which realizes the smooth switching between the communication modes of the power tool 100 and the battery pack 200 under the same physical communication channel, so as to be compatible with the iteration between new and old products and ensure the normal communication between the battery packs and the power tools. At the same time, the data message interaction method during the handshake and the switching method of the communication mode between the battery pack and the power tool also serve as the anti-counterfeiting operations, which increases the difficulty of imitation and the product competitiveness.

It should be noted that, although only two communication modes, namely the serial bus communication mode and the single bus communication mode, are listed in this embodiment, it may be understood that the data interaction mode of this embodiment may also be extended to other buses, such as a CAN bus. At present, the battery pack and the power tool generally use the single bus high-low level communication mode. This mode is easy for people to intercept the communication content and perform a brute force cracking, so as to easily imitate company's battery pack products. Imitation products are of poor quality and have limited technical capabilities, which causes great risks to users. The disclosure provides an encryption method during the data interaction, which ensures a security of the data interaction through performing double encryptions on the data during the handshake and the communication. Even if interactive data is captured by a third party, real and effective data cannot be obtained, which avoids a possibility of being imitated and greatly protects safety of users. Please refer to technical solutions described in a fifth to seventh embodiments below for details. The technical solutions of each embodiment in the fifth to seventh embodiments may also be applied to the technical solutions of each embodiment in the above-mentioned first to fourth embodiments and subsequent eighth to tenth embodiments.

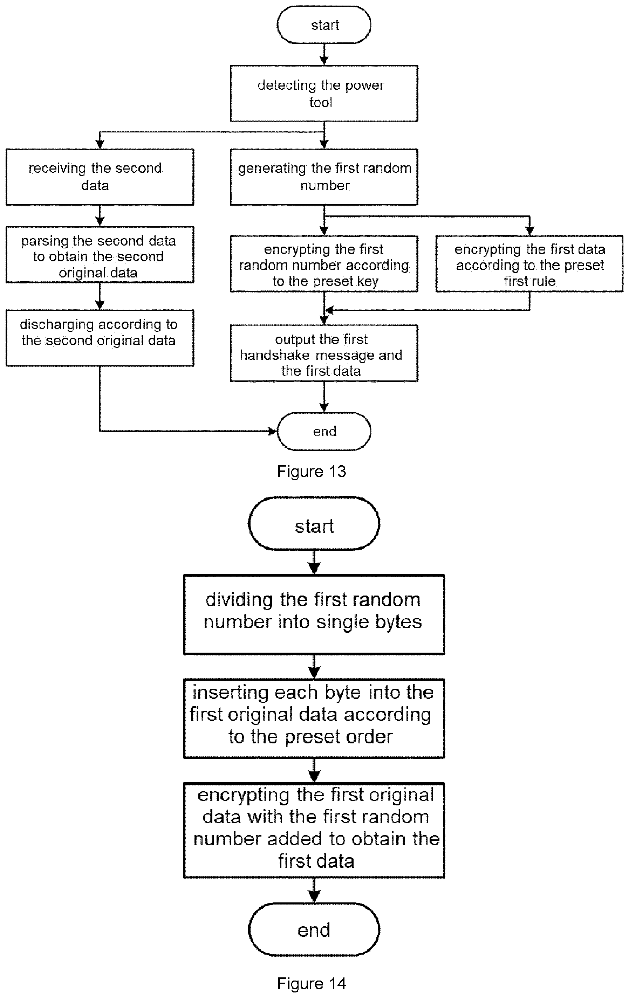

Please refer to FIG. 13. The fifth embodiment provides the data interaction method, which is applied for the battery pack. The battery pack is provided with the communication function. When the power tool is connected with the battery pack, the battery pack may communicate with the power tool through a matching communication port. After the communication connection is successful, the battery pack may interact data with the power tool and charge the power tool. In order to ensure the security of the data interaction, the interactive data in this embodiment is encrypted, so that even if it is captured by the third party, the real and valid data cannot be obtained, which avoids being imitated.

The encryption in this embodiment is realized through the double encryptions during the handshake and the normal communication:
during the handshake, after the battery pack is powered on, detecting the power tool connected, generating a first random number, encrypting the first random number and battery pack data, obtaining first handshake information, sending it to the power tool; receiving second handshake information fed back by the power tool, and decrypting the second handshake information to obtain power tool data and a second random number. At the same time, the battery pack further stores the first random number in a second verification table, and stores the second random number in a first verification table.
During the normal communication, the battery pack encrypts the first random number and first original data, obtains the first data and sends it to the power tool, receives second data fed back by the power tool, decrypts the second data, and obtains second original data. The battery pack discharges according to the second original data and the power tool data.

In an embodiment:
after the battery pack is powered on, the connected power tool is detected. The battery pack performs the communication handshake with the power tool, and the first random number is generated after the handshake. And the battery pack data and the first random number are encrypted into first handshake information according to a preset key. In one or more embodiments, the preset key is agreed upon in advance, for example, set to "abcdef", and is used to encrypt and decrypt communication data during the handshake. During the handshake, the battery pack data includes fixed information such as battery pack voltage and current. The battery pack packages and encrypts the battery pack data and the first random number generated this time, and sends them to the power tool. The power tool may obtain handshake data and the first random number according to the agreed preset key.

It should be noted that, the first random number is a natural number greater than 1. In order to increase a complexity of the encryption, a value of the first random number may be appropriately increased. For example, in this embodiment, a generation range of the first random number is set from 10000 to 99999.

In addition, after each successful handshake between the battery pack and the power tool, the first random number will be generated. In order to ensure a specific of the first random number, the battery pack will store the generated first random number to the preset second verification table. Before storing the first random number each time, the first random number generated this time is compared with data in the second verification table. If there is same data, the first random number is discarded and a new first random number is generated until the generated first random number is a new value.

In order to reduce memory usage, the amount of data in the second verification table may be limited if necessary. For example, the amount of data set in this embodiment is 1000, which means that 1000 first random numbers may be stored in the second verification table, and each first random number is arranged in a chronological order. When the amount of data is greater than 1000, the first random number generated this time is used to replace the earliest first random number in the second verification table, thereby ensuring that all data stored in the second verification table are the latest.

Continuing to explain, after the handshake is completed, the battery pack and the power tool communicate normally and transmit data. The battery pack outputs the first data and the first handshake information, receives the input second data, and then discharges according to the second data.

In one or more embodiments, the battery pack encrypts the first original data and the first random number into the first data according to a preset first rule. It should be understood that the first original data is real-time discharging parameters of the battery pack, including a discharging voltage, a discharging current, a single battery cell voltage, a temperature, etc. In one or more embodiments, the battery pack encrypting the first original data and the first random number into the first data according to the preset first rule includes:
please refer to FIG. 14, according to the preset order, dividing the first random number into single bytes, and inserting each byte into the first original data according to the preset order, so as to add the first random number to the first original data; and then encrypting the first original data with the first random number added by a preset encryption algorithm to obtain the first data.

For example, the first original data of the battery pack is D0 = Ox01, 0x02, 0x03, 0x04, 0x05, 0x06, the first random number generated is 43789, and the corresponding 5 bytes are: 0x04, 0x03, 0x07, 0x08, 0x09. Each byte of the first random number is inserted into the first original data according to the preset order. In one or more embodiments, the preset order may be to insert each byte of the first random number from front to back into the first original data at intervals, and obtain data D1=0x01, 0x04, 0x02, 0x03, 0x03, 0x07, 0x04, 0x08, 0x05, 0x09, 0x06. It should be understood that the preset order may be set as needed. In addition to the above-mentioned insertion of the interval number, the first random number may also be combined according to a certain rule and then inserted into the first original data.

Continuing to explain, the data D1 obtained above is encrypted by a preset encryption algorithm to obtain the first data. In one or more embodiments, the preset encryption algorithm may be selected from a DES encryption algorithm (Data Encryption Standard). The DES encryption algorithm is a symmetric encryption algorithm that uses a same key for encryption and decryption. A key length used by DES is 64 bits. A basic structure of DES was designed by Horst Feistel of IBM, so it is called Feistel network. In the Feistel network, each encryption operation is called a round. After an initial permutation, 64-bit plaintext undergoes 16 rounds of Feistel round encryption and finally forms the final 64-bit ciphertext after a final permutation. The power tool receives the first data, decrypts it through the DES algorithm, and extracts the first random number in a preset order to obtain the first original data.

Continuing to explain, the battery pack receives the second data, parses the second data into second original data according to a preset second rule, and discharges according to the second original data.

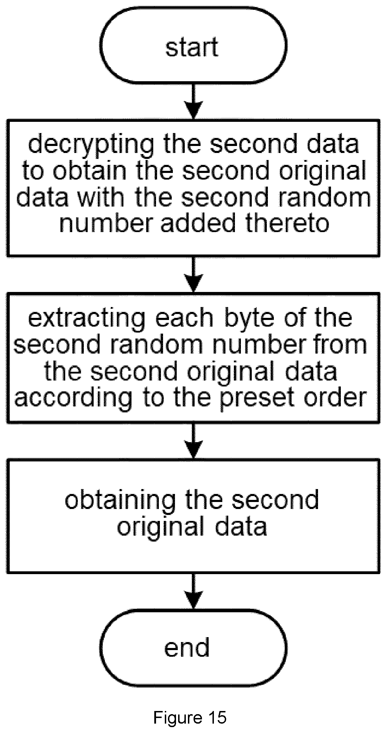

Please refer to FIG. 15, parsing the second data into the second original data according to the preset second rule includes:
decrypting the second data into the second original data with the second random number added thereto through a preset decryption algorithm, separating the second random number and the second original data according to the preset order to obtain the second original data, and extracting each byte of the second random number from the second original data to which the second random number is added in a preset order to obtain the second original data. It should be understood that, the second data here is a charging parameter transmitted by the power tool, and the charging parameter is encrypted in a similar manner to the discharging parameter in the above-mentioned battery pack and then transmitted to the battery pack. For ease of operation, the preset order and preset encryption algorithm used for the encryption of the battery pack and the power tool in this embodiment are the same. In actual use, different orders and encryption algorithms may be used under an implementation agreement.

During the communication, the battery pack further receives second handshake information transmitted by the power tool. The battery pack decrypts the second handshake information according to the preset key to obtain the second random number, and saves the second random number to the preset first verification table in the chronological order. When the amount of data in the first verification table is greater than the preset first number, the second random number received this time is used to replace the earliest second random number in the first verification table. In order to reduce memory usage, the amount of data in the first verification table may be limited if necessary. For example, the amount of data set in this embodiment is 1000, which means that 1000 second random numbers may be stored in the first verification table, and each second random number is arranged in the chronological order. When the amount of data is greater than 1000, the second random number generated this time is used to replace the earliest second random number in the first verification table, thereby ensuring that all data stored in the first verification table are the latest.

It should be understood that each battery pack and power tool carries a specific identification code when it leaves the factory. The battery pack and the power tool may exchange their respective identification codes in a handshake information interaction after the connection and handshake are successful. For example, after one battery pack is connected with one hundred of the power tools, it stores the identification codes of these one hundred of the power tools and 1000 second random numbers corresponding to each power tool. When a 101 st power tool is connected with the battery pack, the battery pack will use 101 st power tool information to replace the information of the first power tool, thereby ensuring that the saved power tools are the latest tools.

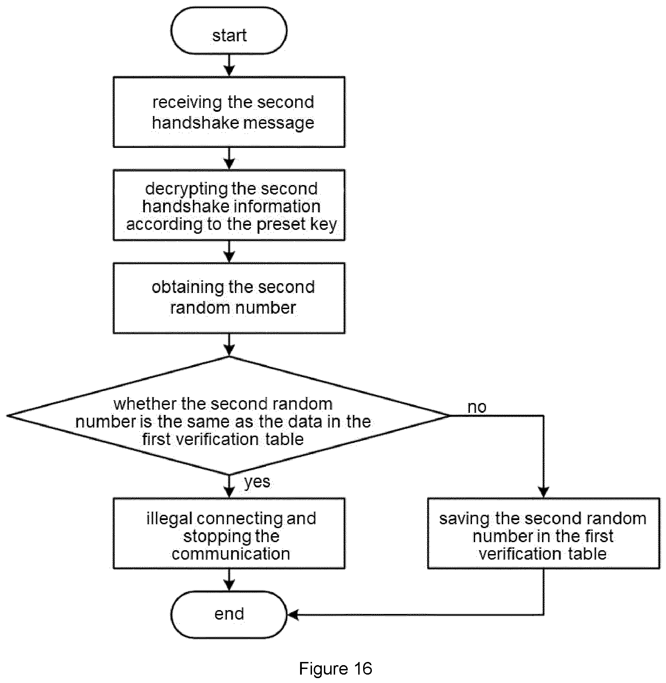

Further, this embodiment further provides a failure determination mechanism, including:
please refer to FIG. 16, after receiving the second handshake message from the power tool, the battery pack comparing the parsed second random number with the data in the first verification table, if there is same data, considering that the second random number does not meet a failure mechanism and the connected power tool is illegally connected, the battery pack disconnecting the communication connection with the power tool, stopping outputting the first data and stopping receiving the second data; if there is no same data, considering that the second random number meets the failure mechanism, saving the second random number in the first verification table, at the same time, the battery pack and the power tool performing the normal data interaction, outputting the first data, receiving the second data, and then discharging the power tool according to the received second data.

It should be understood that when the battery pack and the power tool interact with each other, the data is updated in real time based on the data fed back by each other, which means that the first data output by the battery pack is generated based on the second handshake information and the second data fed back by the power tool. Correspondingly, the second data output by the power tool is generated based on the first handshake information and the first data fed back by the battery pack.

It may be seen that, this embodiment performs the double encryptions on the data during the handshake and the communication respectively, thereby ensuring a security of the interaction data. Even if the interaction data is captured by the third party, real and valid data cannot be obtained, thus avoiding the possibility of being imitated and greatly ensuring the safety of the user. In addition, the received random number is verified. If it does not meet the failure mechanism, the connected power tool is considered to be illegally connected and the communication connection is disconnected, which avoids the possibility of imitation and greatly ensuring the safety of the user.

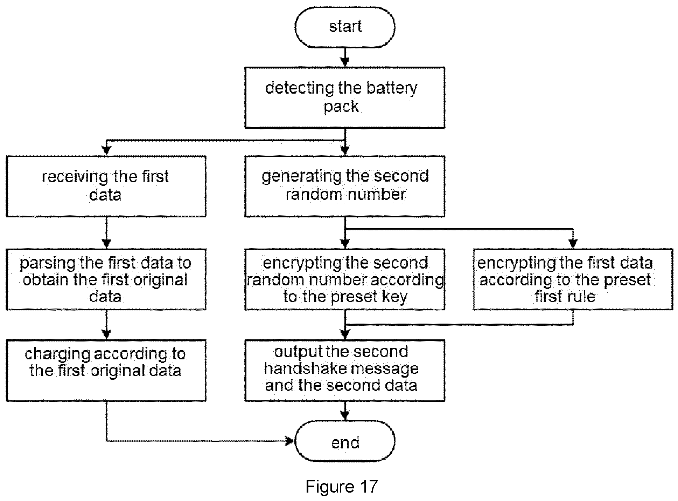

Please refer to FIG. 17. The sixth embodiment provides the data interaction method, which is applied for the power tool. The power tool is provided with the communication function. When the battery pack is connected with the power tool, the power tool may communicate with the battery pack through the matching communication port. After the communication connection is successful, the power tool may interact data with the battery pack and is charged by the battery pack. In order to ensure the security of the data interaction, the interactive data in this embodiment is encrypted, so that even if it is captured by the third party, the real and valid data cannot be obtained, which avoids being imitated.

The encryption in this embodiment is realized through the double encryptions during the handshake and the normal communication:
during the handshake, after the power tool is powered on, detecting the connected battery pack, generating the second random number, encrypting the second random number and the power tool data, obtaining the second handshake information, sending it to the battery pack; receiving the first handshake information fed back by the battery pack, and decrypting the first handshake information to obtain the battery pack data and the first random number. At the same time, the power tool further stores the first random number in a third verification table, and stores the second random number in a fourth verification table.

During the normal communication, the power tool encrypts the second random number and the second original data, obtains the second data and sends it to the battery pack, receives the first data fed back by the power tool, decrypts the first data, and obtains the first original data. The power tool is charged according to the first original data and the battery pack data.

In an embodiment:
after the power tool is powered on, the connected battery pack is detected. The power tool performs the communication handshake with the battery pack, and the second random number is generated after the handshake. And the power tool data and the second random number are encrypted into the second handshake information according to the preset key. In one or more embodiments, the preset key is agreed upon in advance, for example, set to "abcdef", and is used to encrypt and decrypt the communication data during the handshake. During the handshake, the power tool data includes fixed information such as power tool voltage and current. The power tool packages and encrypts the power tool data and the second random number generated this time, and sends them to the battery pack. The battery pack may obtain handshake data and the second random number according to the agreed preset key.

It should be noted that, the second random number is the natural number greater than 1. In order to increase the complexity of the encryption, a value of the second random number may be appropriately increased. For example, in this embodiment, a generation range of the second random number is set from 10000 to 99999.

In addition, after each successful handshake between the power tool and the battery pack, the second random number will be generated. In order to ensure a specific of the second random number, the power tool will store the generated second random number to the preset fourth verification table. Before storing the second random number each time, the second random number generated this time is compared with data in the fourth verification table. If there is same data, the second random number is discarded and a new second random number is generated until the generated second random number is a new value.

In order to reduce memory usage, the amount of data in the fourth verification table may be limited if necessary. For example, the amount of data set in this embodiment is 1000, which means that 1000 second random numbers may be stored in the fourth verification table, and each second random number is arranged in the chronological order. When the amount of data is greater than 1000, the second random number generated this time is used to replace the earliest second random number in the fourth verification table, thereby ensuring that all data stored in the fourth verification table are the latest.

Continuing to explain, after the handshake is completed, the power tool and the battery pack communicate normally and transmit data. The power tool outputs the second data and the second handshake information, receives the input first data, and then is charged according to the first data.

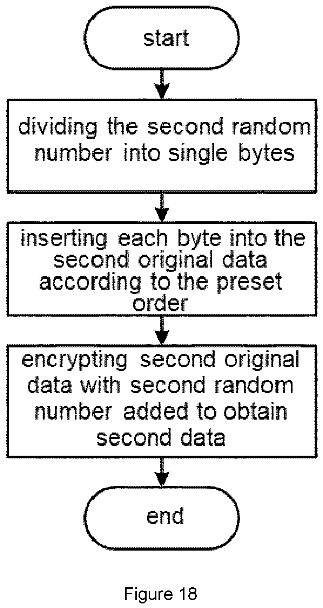

In one or more embodiments, the power tool encrypts the second original data and the second random number into the second data according to a preset second rule. It should be understood that the second original data is real-time charging parameters of the power tool, including a charging voltage, a charging current, a temperature, etc. In one or more embodiments, the power tool encrypting the second original data and the second random number into the second data according to the preset first rule includes:
please refer to FIG. 18, according to the preset order, dividing the second random number into single bytes, and inserting each byte into the second original data according to the preset order, so as to add the second random number to the second original data; and then encrypting the second original data with the second random number added by a preset encryption algorithm to obtain the second data.

For example, the second original data of the power tool is D0' = 0x06, 0x05, 0x04, 0x03, 0x02, 0x01, the first random number generated is 98734, and the corresponding 5 bytes are: 0x09, 0x08, 0x07, 0x03, 0x04. Each byte of the second random number is inserted into the second original data according to the preset order. In one or more embodiments, the preset order may be to insert each byte of the second random number from front to back into the second original data at intervals, and obtain data D1' = 0x06, 0x09, 0x05, 0x08, 0x04, 0x07, 0x03, 0x03, 0x02, 0x04, 0x01. It should be understood that the preset order may be set as needed. In addition to the above-mentioned insertion of the interval number, the second random number may also be combined according to a certain rule and then inserted into the second original data.

Continuing to explain, the data D1' obtained above is encrypted by the preset encryption algorithm to obtain the second data. In one or more embodiments, the preset encryption algorithm may select the DES encryption algorithm. The battery pack receives the second data, uses the DES decryption algorithm, and extracts the second random number in the preset order to obtain the second original data.

Continuing to explain, the power tool receives the first data, parses the first data into first original data according to the preset second rule, and is charged according to the first original data.

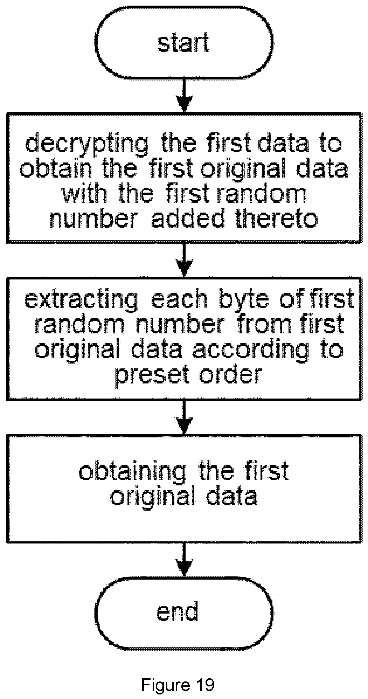

Please refer to FIG. 19, parsing the first data into the first original data according to the preset second rule includes:
decrypting the first data into the first original data with the first random number added thereto through the preset decryption algorithm, separating the first random number and the first original data according to the preset order to obtain the first original data, and extracting each byte of the first random number from the first original data to which the first random number is added in the preset order to obtain the first original data. It should be understood that, the first data here is the discharging parameter transmitted by the battery pack, and the discharging parameter is encrypted in the similar manner to the discharging parameter in the above-mentioned power tool and then transmitted to the power tool. For ease of operation, the preset order and preset encryption algorithm used for the encryption of the power tool and the battery pack in this embodiment are the same. In actual use, different orders and encryption algorithms may be used under the implementation agreement.

During the communication, the power tool further receives first handshake information transmitted by the battery pack. The power tool decrypts the first handshake information according to the preset key to obtain the first random number, and saves the first random number to the preset third verification table in the chronological order. When the amount of data in the third verification table is greater than a preset third number, the first random number received this time is used to replace the earliest first random number in the third verification table. In order to reduce memory usage, the amount of data in the third verification table may be limited if necessary. For example, the amount of data set in this embodiment is 1000, which means that 1000 first random numbers may be stored in the third verification table, and each first random number is arranged in a chronological order. When the amount of data is greater than 1000, the first random number generated this time is used to replace the earliest first random number in the third verification table, thereby ensuring that all data stored in the third verification table are the latest.

It should be understood that each power tool and battery pack carries the specific identification code when it leaves the factory. The power tool and battery pack may exchange their respective identification codes in a handshake information interaction after the connection and handshake are successful. For example, after one power tool is connected with one hundred of the battery packs, it stores the identification codes of these one hundred of the battery packs and 1000 first random numbers corresponding to each battery pack. When a 101 st battery pack is connected with the power tool, the power tool will use 101 st battery pack information to replace the information of the first battery pack, thereby ensuring that the saved battery packs are latest.

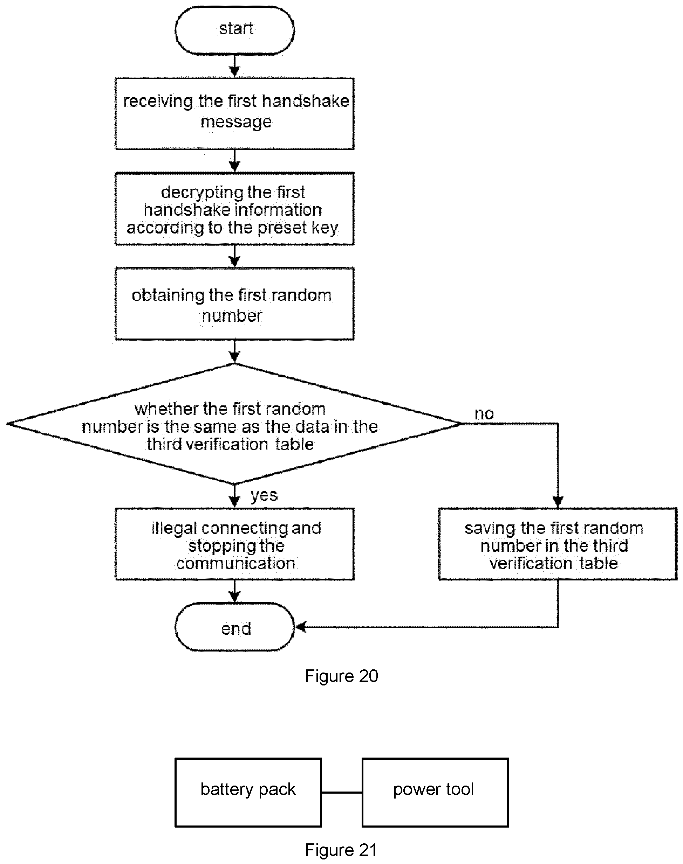

Further, this embodiment further provides the failure determination mechanism, including:
please refer to FIG. 20, after receiving the first handshake message from the battery pack, the power tool comparing the parsed first random number with the data in the third verification table, if there is same data, considering that the first random number does not meet a failure mechanism and the connected battery pack is illegally connected, the power tool disconnecting the communication connection with the battery pack, stopping outputting the second data and stopping receiving the first data; if there is no same data, considering that the first random number meets the failure mechanism, saving the first random number in the third verification table, at the same time, the power tool and the battery pack performing the normal data interaction, outputting the second data, receiving the first data, and then the power tool is charged according to the received first data.

It may be seen that, this embodiment performs the double encryptions on the data during the handshake and the communication respectively, thereby ensuring the security of the interaction data. Even if the interaction data is captured by the third party, the real and valid data cannot be obtained, thus avoiding the possibility of being imitated and greatly ensuring the safety of the user. In addition, the received random number is verified. If it does not meet the failure mechanism, the connected battery pack is considered to be illegally connected and the communication connection is disconnected, which avoids the possibility of imitation and greatly ensuring the safety of the user.

Please refer to FIG. 21. The seventh embodiment of the disclosure provides the data interaction system, which includes the battery pack and the power tool detachably connected with each other. Both the battery pack and the power tool have the communication functions. When the two are connected with each other, they may communicate through the matching communication port. After successful communication, the data interaction is performed, and the charging and the discharging are performed based on the interactive data.

In one or more embodiments, after the battery pack is powered on, the connected power tool is detected. The battery pack performs the communication handshake with the power tool, and the first random number is generated after the handshake. And the battery pack data and the first random number are encrypted into first handshake information according to the preset key and output to the power tool. Correspondingly, after the power tool is powered on, the connected battery pack is detected. The power tool performs the communication handshake with the battery pack, and the second random number is generated after the handshake. And the power tool data and the second random number are encrypted into the second handshake information according to the preset key and output to the battery pack.

The battery pack decrypts the second handshake information according to the preset key to obtain the second random number, and saves the second random number to the preset first verification table in the chronological order. When the amount of data in the first verification table is greater than the preset first number, the second random number received this time is used to replace the earliest second random number in the first verification table.

The power tool decrypts the first handshake information according to the preset key to obtain the first random number, and saves the first random number to the preset third verification table in the chronological order. When the amount of data in the third verification table is greater than a preset third number, the first random number received this time is used to replace the earliest first random number in the third verification table.

In addition, the battery pack compares the second random number with the first verification table before saving the second random number, if there is the same data, the connected power tool is considered to be illegally connected, and the battery pack disconnects the communication connection with the power tool. Correspondingly, the power tool compares the first random number with the third verification table before saving the first random number, if there is the same data, the connected battery pack is considered to be illegally connected, and the power tool disconnects the communication connection with the battery pack.

Further, the battery pack further compares the first random number generated with the data in the preset second verification table. If there is the same data, the new first random number is re-generated. Otherwise, the first random number generated this time is saved into the second verification table in the chronological order. When the amount of data in the second verification table is greater than the preset second amount, the first random number generated this time is used to replace the earliest first random number in the second verification table.

Correspondingly, the power tool further compares the second random number generated with the data in the preset fourth verification table. If there is the same data, the new second random number is re-generated. Otherwise, the second random number generated this time is saved into the fourth verification table in the chronological order, when the amount of data in the fourth verification table is greater than a preset fourth amount, the second random number generated this time is used to replace the earliest second random number in the fourth verification table.

Continuing to explain, if the battery pack determines that the connected power tool is legal according to the received second random number, it performs the normal data interaction with the power tool, outputs the first data, receives the second data, and discharges to the power tool according to the second data. Specifically:
the battery pack combines the first original data and the first random number according to the preset first rule and encrypts them into the first data. In one or more embodiments, specific operations of generating the first data include: according to the preset order, dividing the first random number into single bytes, and inserting each byte into the first original data according to the preset order, so as to add the first random number to the first original data; and then encrypting the first original data with the first random number added by a preset encryption algorithm to obtain the first data.

At the same time, the battery pack receives the second data and parses the second data into the second original data according to the preset second rule. Specific operations of obtaining the second original data include: decrypting the second data into the second original data with the second random number added thereto through the preset decryption algorithm, separating the second random number and the second original data according to the preset order to obtain the second original data, and extracting each byte of the second random number from the second original data to which the second random number is added in the preset order to obtain the second original data.

The battery pack discharges the power tool according to the second original data.

Correspondingly, if the power tool determines that the connected battery pack is legal according to the received first random number, it performs the normal data interaction with the battery pack, outputs the second data, receives the first data, and charges the battery pack according to the second data. Specifically:
the power tool combines the second original data and the second random number according to the preset first rule and encrypts them into the second data. In one or more embodiments, specific operations of generating the second data include: according to the preset order, dividing the second random number into single bytes, and inserting each byte into the second original data according to the preset order, so as to add the second random number to the second original data; and then encrypting the second original data with the second random number added by the preset encryption algorithm to obtain the second data.

**At** the same time, the power tool receives the first data and parses the first data into the first original data according to the preset second rule. In one or more embodiments, specific operations of obtaining the first original data include: decrypting the first data into the first original data with the first random number added thereto through the preset decryption algorithm, separating the first random number and the first original data according to the preset order to obtain the first original data, and extracting each byte of the first random number from the first original data to which the first random number is added in the preset order to obtain the first original data.

The power tool is charged through the battery pack according to the first original data.

It may be seen that, this embodiment performs the double encryptions on the data during the handshake and the communication respectively, thereby ensuring the security of the interaction data. Even if the interaction data is captured by the third party, the real and valid data cannot be obtained, thus avoiding the possibility of being imitated and greatly ensuring the safety of the user. In addition, the received random number is verified. If it does not meet the failure mechanism, the connected battery pack or the power tool is considered to be illegally connected and the communication connection is disconnected, which avoids the possibility of imitation and greatly ensuring the safety of the user.

In summary, the disclosure provides the data interaction method and the system thereof, which performs the double encryptions on the data during the handshake and the communication respectively, thereby ensuring the security of the interaction data. Even if the interaction data is captured by the third party, the real and valid data cannot be obtained, thus avoiding the possibility of being imitated and greatly ensuring the safety of the user. In addition, the received random number is verified. If it does not meet the failure mechanism, the connected battery pack of the power tool is considered to be illegally connected and the communication connection is disconnected, which avoids the possibility of imitation and greatly ensuring the safety of the user. Therefore, the disclosure effectively overcomes various shortcomings in the prior art and has high industrial utilization value.

At present, the battery pack and the power tool generally use the single bus high-low level communication mode. This mode is easy for people to intercept the communication content and perform a brute force cracking, so as to easily imitate company's battery pack products. The disclosure provides a communication anti-counterfeiting method and a system thereof during the data interaction. By generating verification information and storing it in a memory of the battery pack, the power tool and the battery pack first read the verification information from the memory to verify it before the communicating (the normal data interaction). Only when the verification is successful will the data interaction with the battery pack be performed, otherwise the communication with the battery pack will be stopped, thereby reducing the risk of the interception of the communication content and preventing the battery pack product from being easily imitated. Please refer to technical solutions described in an eighth to tenth embodiments below for details. The technical solutions of each embodiment in the eighth to tenth embodiments may also be applied to the technical solutions of each embodiment in the above-mentioned first to seventh embodiments.

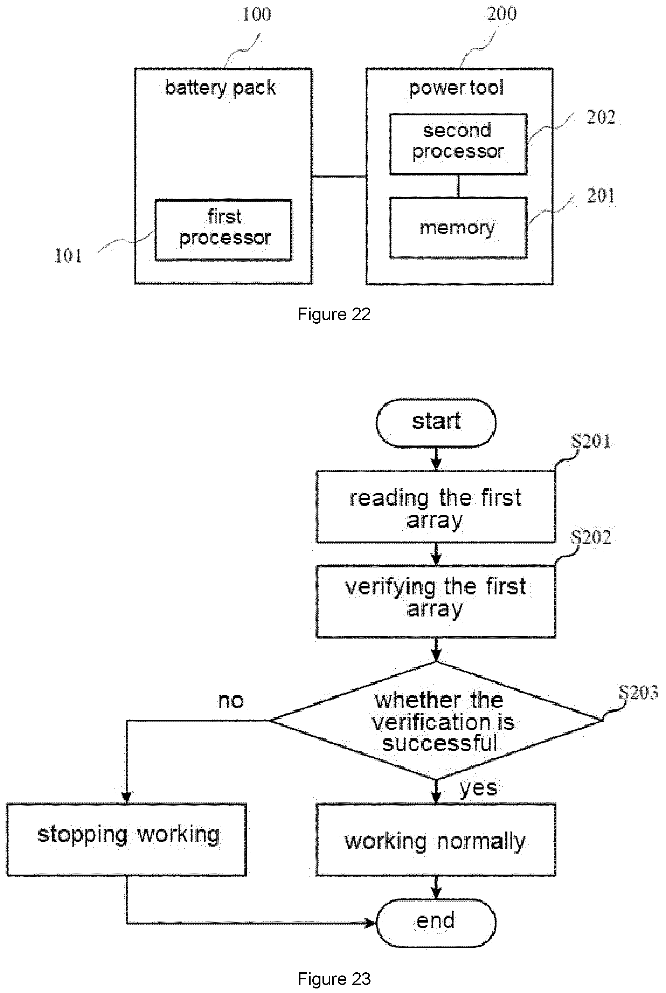

Please refer to FIG. 22. The eighth embodiment of the disclosure provides a communication anti-counterfeiting system of the data interaction, which includes the power tool 100 and the battery pack 200 detachably connected with each other. It should be understood that the power tool 100 and the battery pack 200 in this embodiment both have communication functions, and the two may realize the communication connection through the matching communication port.

The power tool 100 includes a first processor 101 (also called a tool micro-control unit). When the power tool 100 is connected with the battery pack 200, the first processor 101 is communicated with the battery pack 200, obtain the verification information from the battery pack 200 and verify it. If the verification is successful, the normal data interaction is performed with the battery pack 200, otherwise, it is considered to be an abnormal connection and the communication connection with the battery pack 200 is disconnected.

The battery pack 200 includes a memory 201 for storing the verification information. It should be understood that the memory 201 is a storage chip with the communication function, such as an eID chip.

It should be noted that, the verification information is randomly generated according to a system time. In an embodiment, one verification information is randomly generated according to the system time in advance and stored in the memory 201 of the battery pack 200. When the power tool 100 is inserted into the battery pack 200, this verification information is read from the memory 201 and parsed according to the agreed rules. In another embodiment, it is also possible to generate one verification information in real time according to the system time when the power tool 100 is inserted into the battery pack 200. After the power tool 100 obtains the verification information generated in real time, the power tool 100 parses the verification information according to the agreed rules.

It should be understood that the verification information may be generated by an external device and then stored in the memory 201 of the battery pack 200, or may be generated by the battery pack 200 itself. When the verification information is generated by the battery pack 200 itself, the battery pack 200 further includes a second processor 202 (the battery pack micro-control unit), which is communicated with the memory 201 for generating the verification information and storing it in the memory 201. When the battery pack 200 is inserted into the power tool 100 and activated, the first processor 101 of the power tool is communicated with the second processor 202 and reads the verification information from the memory 201.

The following details are that:
when the power tool 100 is inserted into the battery pack 200, the battery pack 200 is awakened, the first processor 101 establishes the communication connection with the battery pack 200, accesses the memory 201, reads the first array from a specific address of the memory 201, and verifies it. If the verification is successful, the normal data interaction is performed with the battery pack 200, otherwise, the communication connection with the battery pack 200 is stopped. In one or more embodiments, the first processor 101 verifying the first array includes:
determining whether there is a preset verification character in the first array, if yes, intercepting a first key and a first ciphertext in the first array, generating a second ciphertext according to the first key, matching the second ciphertext with the first ciphertext, and if a match is successful, considering the verification to be successful.

Further, the first array is randomly generated and stored in the memory 201 of the battery pack 200. In this embodiment, take the second processor 202 of the battery pack 200 generating the first array as an example for explanation, and a generation includes:
the second processor 202 randomly generating the first key based on the system time, according to a preset rule, generating the first ciphertext according to the first key, and combining the first key, the first ciphertext and the preset verification character in the preset order to obtain the first array.

In one or more embodiments, the system time may be the current time or a specific time selected by the user. The second processor 202 converts the system time into a time stamp and generates the corresponding first key. In one or more embodiments, generating the key based on time is a conventional method in the prior art and has mature implementation methods. For example, in this embodiment, a hash encryption algorithm may be used to generate the corresponding first key based on the system time.

The second processor 202 maps the first key to the first ciphertext according to the preset rule. In one or more embodiments, the preset rule is a mapping relationship between the first key and the first ciphertext, which may be set as needed, for example, multiplying the first key by a specific coefficient to obtain the first ciphertext.

The second processor 202 combines the first key, the first ciphertext and the preset verification character into the first array in the preset order, and writes the first array into the memory 201.

It should be understood that a number of bits of the first key, a number of bits of the first ciphertext and a number of bits of the preset verification character may be the same or different, and may be set as needed in actual use.

In an embodiment, the second processor 202 converts the time stamp according to the current time, and further generates an N-bit first key, and records a first bit of the key as N0, a second bit of the key as N1,... and a last bit of the key as Nn.

The generated N-bit first key is then calculated using the preset rule to obtain an M-bit first ciphertext. For example, a first ciphertext M0=N0+ N1+...+ Nn, a second ciphertext M1=N0+ N1+...+ Nn-1, ... and a last ciphertext Mm=N0.

Then, according to the preset order, the first key, the first ciphertext and the preset verification character are combined, for example, in an order of an N-bit first key + an M-bit first ciphertext + a Y-bit verification character, and the Y-bit verification character in this embodiment may be set to "ABC", which finally forms the first array of N+M+Y bits. Correspondingly, when the first processor 101 verifies the first array, the verification characters may be extracted for comparison according to the preset order, and the first key and the first ciphertext in the first array may be intercepted.

The second processor 202 stores the first array of N+M+Y bits into the specific address of the memory 201.

Further, in order to ensure a correctness of stored data, after storing the first array, the second processor 202 further re-reads the stored first array from the memory 201, and matches the re-read first array with the stored first array. If a matching is successful, it is considered that the first array stored in the memory is correct and may be used. Otherwise, the first array is rewritten into the memory 201 to replace erroneous data.

Continuing to explain, after the first processor 101 reads the first array, in this embodiment, the first array is an array of N+M+Y bits, and the preset verification character is "ABC". It is first determined whether "ABC" exists in the first array. If so, the N-bit first key and the M-bit first ciphertext in the first array are further intercepted, and according to the preset rules, the second ciphertext is generated according to the first key. It should be understood that the preset rules here should be the same as the preset rules used by the above-mentioned second processor 202.

The second ciphertext is matched with the M-bit first ciphertext in the first array. If the matching is successful, it is considered that data read by the first processor 101 from the memory 201 is the first array stored by the first processor 102, which means that the verification is successful, and the battery pack 200 and the power tool 100 may work normally and perform the data interaction. Otherwise, it is considered that the connection between the battery pack 200 and the power tool 100 is the abnormal connection. In order to prevent the brute force cracking, the communication connection between the two should be disconnected immediately.

It should be understood that, in the above embodiments, the first processor 101 is connected with the second processor 202 and the memory 201 by a bus, and the second processor 202 is connected with the memory 201 by the bus. The bus may include any number of interconnected buses and bridges, and the bus connects various circuits of the first processor 101, the second processor 202 and the memory 201 together. The bus may further connect various other circuits together, such as peripheral devices, voltage regulators, and power management circuits, which are all well known in this art. Therefore, these will not be described further herein. The bus port provides a port between the bus and a transceiver. The transceiver may be one element or a plurality of elements, such as a plurality of receivers and transmitters, which provides a unit for communicating with various other devices over a transmission medium. The data processed by the first processor 101 is transmitted on a wireless medium through an antenna. Furthermore, the antenna receives the data and transmits the data to the first processor 101 and the second processor 202.

The first processor 101 and the second processor 202 are responsible for managing the bus and a general processing, and may further provide various functions, including a timing, a peripheral port, a voltage regulation, a power management, a charging and discharging management, and other control functions. The memory 201 may further be used to store the data used by the second processor 202 when performing operations.

It may be seen that, the method in this embodiment generates the verification information and stores it in the memory 201 of the battery pack 200. Before the power tool 100 communicates with the battery pack 200, it first reads the verification information from the memory 201 to verify it. Only if the verification is successful, the data interaction with the battery pack 200 is performed. Otherwise, the communication with the battery pack 200 is stopped, which reduces a risk of the communication content being intercepted and preventing the battery pack from being easily imitated. In addition, the disclosure realizes an anti-counterfeiting function with a help of the memory 201, without changing a conventional circuit structure, thus reducing costs.

Please refer to FIG. 23. A ninth embodiment of the disclosure provides the communication anti-counterfeiting method. The communication anti-counterfeiting method is used for the power tool 100, and the power tool 100 is detachably connected with the battery pack 200. The communication anti-counterfeiting method includes:
S201, reading the first array in the memory of the battery pack 200;
S202, verifying the first array; and
S203, determining whether the verification is successful, if yes, working normally and interacting data with the battery pack 200, otherwise, stopping the communication connection with the battery pack 200.

In one or more embodiments, in S201, when the power tool 100 is inserted into the battery pack 200, the battery pack 200 is awakened, establishes the communication connection with the power tool 100, accesses the memory 201, and reads the first array from the specific address of the memory 201.

In S202, the first array is the verification information of the power tool 100 and the battery pack 200. If the verification is successful, it is considered that the power tool 100 and the battery pack 200 are normally connected and may work normally. Otherwise, it is considered to be an abnormal connection and should be stopped immediately to avoid being cracked by force.

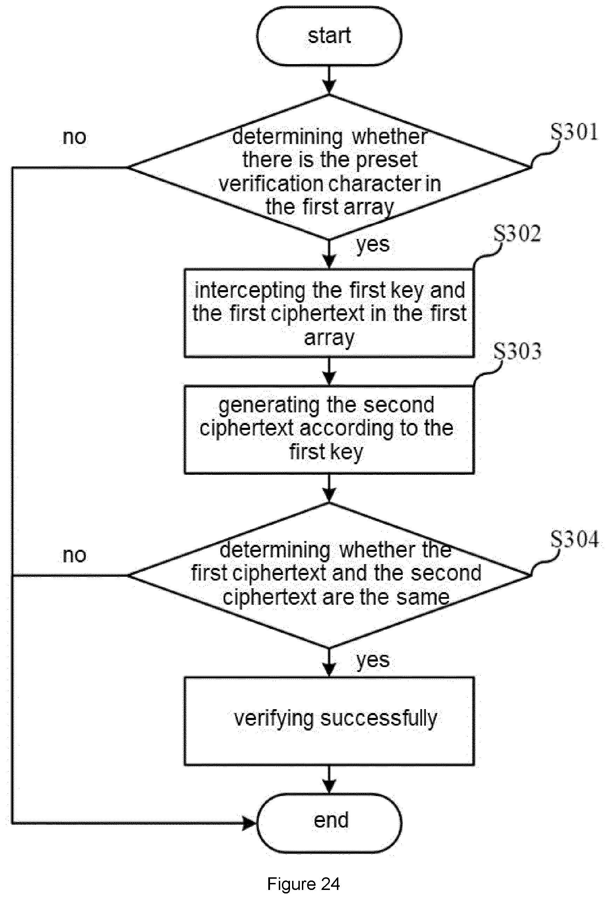

Please refer to FIG. 24. Verifying the first array includes:
S301, determining whether there is the preset verification character in the first array;
   In one or more embodiments, determining whether there is the verification character "ABC" set in the first embodiment: in the first array. It should be understood that different verification characters may be set as needed in the actual use.
S302, if there is the preset verification character, intercepting the first key and the first ciphertext in the first array.

In one or more embodiments, the first key, the first ciphertext and the verification character in the first array are arranged in the preset order. Accordingly, when intercepting, the first key and the first ciphertext in the first array may be intercepted in the preset order.

S303, generating the second ciphertext according to the first key.

In one or more embodiments, according to the preset rules, the second ciphertext is generated according to the first key. It should be understood that, the preset rules here should be the same as the preset rules used by the second processor 202 in the first embodiment. For example, the intercepted first key is multiplied by a specific coefficient to obtain the second ciphertext.

S304, matching the second ciphertext with the first ciphertext, which means determining whether the first ciphertext and the second ciphertext are the same, if they are the same, the matching being successful, which means that the verification is successful, and the normal communication being possible.

In one or more embodiments, the first ciphertext and the second ciphertext are compared step by step. If each character is the same, the two are considered to match successfully.

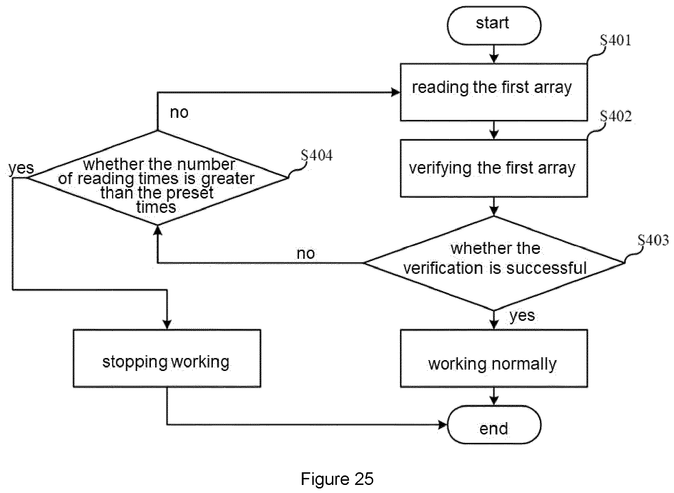

Please refer to FIG. 25. In another embodiment, the communication anti-counterfeiting method of the data interaction in the ninth embodiment of the disclosure is improved on a basis of that shown in FIG. 23, and includes:
S401, reading the first array in the memory of the battery pack 200;
S402, verifying the first array;
S403, determining whether the verification is successful, if yes, working normally and interacting data with the battery pack 200, otherwise, stopping the communication connection with the battery pack 200; and
S404, after the verification fails, reading the first array in the memory again and verifying it, if the verification is successful, working normally and interacting data with the battery pack 200, otherwise, stopping the communication connection with the battery pack 200. In another embodiment, the first array in the memory may be read multiple times, and a number of reading times the memory is recorded. At the same time, the read first array is verified. If the verification is successful within the preset number of times, the power tool works normally and interacts data with the battery pack 200, otherwise, the communication connection with the battery pack 200 is stopped.

It may be seen that, the method in this embodiment generates the verification information and stores it in the memory 201 of the battery pack 200. Before the power tool 100 communicates with the battery pack 200, it first reads the verification information from the memory 201 to verify it. Only if the verification is successful, the data interaction with the battery pack 200 is performed. Otherwise, the communication with the battery pack 200 is stopped, which reduces the risk of the communication content being intercepted and preventing the battery pack from being easily imitated. In addition, the disclosure realizes the anti-counterfeiting function with the help of the memory 201, without changing the conventional circuit structure, thus reducing costs.

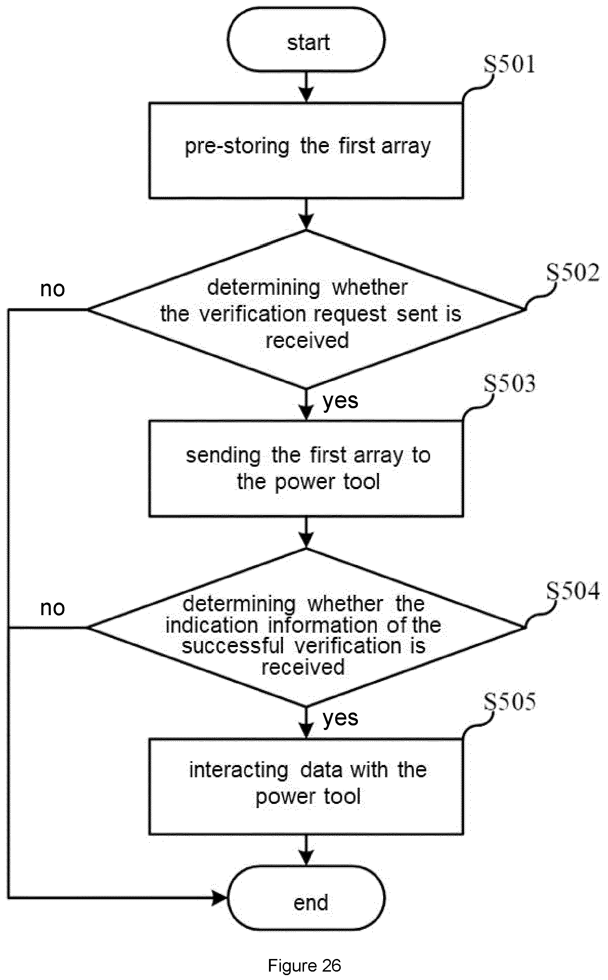

Please refer to FIG. 26. A tenth embodiment of the disclosure provides the communication anti-counterfeiting method of the data interaction. The communication anti-counterfeiting method is used for the battery pack 200, and the battery pack 200 is detachably connected with the power tool 100. The communication anti-counterfeiting method includes:
S501, pre-storing the first array, and the first array being used for verification between the battery pack 200 and the power tool 100;
S502, determining whether the verification request sent by the power tool 100 is received, if received, executing S503;
S503, sending the first array to the power tool 100 for verification by the power tool 100;
S504, determining whether an indication information sent by the power tool 100 is received, where the indication information is used to indicate to the battery pack whether the verification is successful, if successful, executing S505; and
S505, interacting data with the power tool 100.

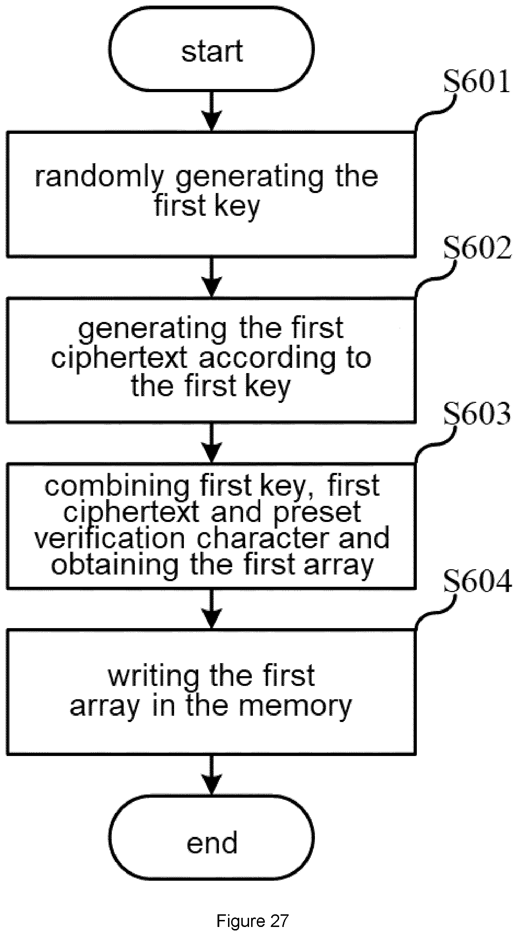

Please refer to FIG. 27. The first array is randomly generated and stored in the memory 201 of the battery pack 200, and it may be generated by the external device and then stored in the memory 201 of the battery pack 200, or may be generated by the battery pack 200 itself. In one or more embodiments, generating the first array includes:
S601, randomly generating the first key based on the system time.

In one or more embodiments, the system time may be the current time or the specific time selected by the user. The system time is converted into the time stamp and generates the corresponding first key. Generating the key based on time is the conventional method in the prior art and has mature implementation methods. For example, in this embodiment, the hash encryption algorithm may be used to generate the corresponding first key based on the system time.

S602, generating the first ciphertext according to the first key.

In one or more embodiments, the first key may be mapped to the first ciphertext according to the preset rule. In one or more embodiments, the preset rule is the mapping relationship between the first key and the first ciphertext, which may be set as needed, for example, multiplying the first key by the specific coefficient to obtain the first ciphertext.

S603, combining the first key, the first ciphertext and the preset verification character into the first array in the preset order, and obtaining the first array.

In one or more embodiments, the first key, the first ciphertext and the preset verification character are all multi-bits strings, the number of bits of the first key, the number of bits of the first ciphertext and the number of bits of the preset verification character may be the same or different, and may be set as needed in actual use.

For example, the N-bit first key is generated according to the system time, the first bit of the key is recorded as N0, the second bit of the key is recorded as N1,... and the last bit of the key is recorded as Nn.

The generated N-bit first key is then calculated using the preset rule to obtain the M-bit first ciphertext. For example, the first ciphertext M0=N0+ N1+...+ Nn, the second ciphertext M1=NO+ N1+...+ Nn-1, ... and the last ciphertext Mm=N0.

Then, according to the preset order, the first key, the first ciphertext and the preset verification character are combined, for example, in the order of the N-bit first key + the M-bit first ciphertext + the Y-bit verification character, and the Y-bit verification character in this embodiment may be set to "ABC", which finally forms the first array of N+M+Y bits.

S604, writing the first array in the memory of the battery pack 200.

In one or more embodiments, the first array of N+M+Y bits is stored into the specific address of the memory 201.

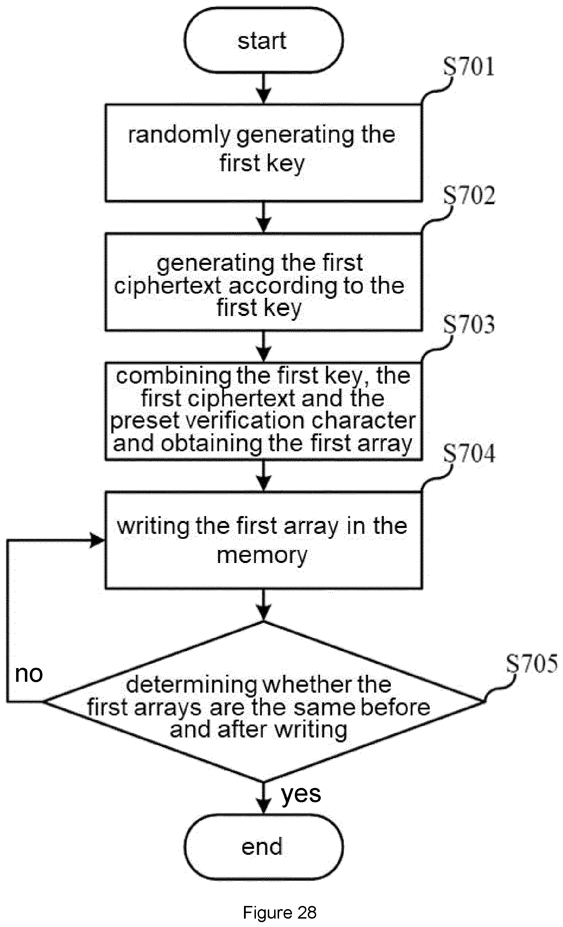

Please refer to FIG. 28. In another embodiment, generating the first array in the disclosure is improved on a basis of that shown in FIG. 27, and includes:
S701, randomly generating the first key based on the system time;
S702, generating the first ciphertext according to the first key;
S703, combining the first key, the first ciphertext and the preset verification character into the first array in the preset order, and obtaining the first array;
S704, writing the first array in the memory of the battery pack 200; and
S705, after writing the first array into the memory of the battery pack 200, rereading the stored first array, and matching the re-read first array with the stored first array. If the matching is successful, it is considered that the first array stored in the memory is correct and may be used. Otherwise, the first array is rewritten into the memory to replace the erroneous data.

It may be seen that, the method in this embodiment generates the verification information and stores it in the memory 201 of the battery pack 200. Before the power tool 100 communicates with the battery pack 200, it first reads the verification information from the memory 201 to verify it. Only if the verification is successful, the data interaction with the battery pack 200 is performed. Otherwise, the communication with the battery pack 200 is stopped, which reduces the risk of the communication content being intercepted and preventing the battery pack from being easily imitated. In addition, the disclosure realizes the anti-counterfeiting function with the help of the memory 201, without changing the conventional circuit structure, thus reducing costs.

In summary, the communication anti-counterfeiting method of the data interaction of the disclosure generates the verification information and stores it in the memory 201 of the battery pack 200. Before the power tool 100 communicates with the battery pack 200, it first reads the verification information from the memory 201 to verify it. Only if the verification is successful, the data interaction with the battery pack 200 is performed. Otherwise, the communication with the battery pack 200 is stopped, which reduces the risk of the communication content being intercepted and preventing the battery pack from being easily imitated. In addition, the disclosure realizes the anti-counterfeiting function with the help of the memory 201, without changing the conventional circuit structure, thus reducing the costs.

It is obvious to those skilled in the art that the disclosure is not limited to the details of the above-described exemplary embodiments, and that the disclosure can be implemented in other specific forms without departing from the spirit or essential characteristics of the disclosure.

The above embodiments are only used to illustrate the technical solutions of the disclosure and not to limit it. Although the disclosure has been described in detail with reference to the preferred embodiments, those of ordinary skill in the art should understand that the technical solutions of the disclosure may be modified or equivalently replaced without departing from the spirit and scope of the technical solution of the disclosure.

## Claims

1. A data interaction method, applied to interact data between a battery pack and a power tool, the battery pack and the power tool sharing a same physical communication channel for communication, one of the battery pack and the power tool having at least one communication mode and the other of the battery pack and the power tool having at least two communication modes,
the data interaction method comprising:
performing a handshake communication between the battery pack and the power tool;
the battery pack or the power tool which having at least two communication modes switching a current communication mode to another communication mode if the handshake communication between the battery pack and the power tool fails,
re-performing the handshake communication between the battery pack and the power tool until the handshake communication between the battery pack and the power tool succeeds, and
the battery pack and the power tool transmitting data to each other.

2. The data interaction method according to claim 1, wherein, the battery pack comprises one communication mode, and the power tool comprises two communication modes;
performing the handshake communication between the battery pack and the power tool comprises:
the battery pack sending a handshake message to the power tool;
the power tool replying an agreed message to the battery pack if the power tool receives the handshake message within a first preset time, determining that the handshake communication between the battery pack and the power tool is successful if the battery pack receives the agreed message replied by the power tool;
determining that the handshake communication between the battery pack and the power tool fails if the power tool does not receive the handshake message within the first preset time, the power tool switching its current communication mode to another communication mode if the handshake communication between the battery pack and the power tool fails, and re-performing the handshake communication between the battery pack and the power tool until the handshake communication between the battery pack and the power tool is successful.

3. The data interaction method according to claim 1, wherein, the battery pack comprises two communication modes, and the power tool comprises one communication mode;
performing the handshake communication between the battery pack and the power tool comprises:
the battery pack sending a handshake message to the power tool and recording a number of sending times of the handshake message,
determining that the handshake communication between the battery pack and the power tool is successful if the battery pack receives an agreed message replied by the power tool within a preset number of sending times of the handshake message,
determining that the handshake communication between the battery pack and the power tool fails if the battery pack does not receive the agreed message replied by the power tool within the preset number of sending times of the handshake message, and
the battery pack switching its current communication mode to another communication mode if the handshake communication between the battery pack and the power tool fails, and re-performing the handshake communication between the battery pack and the power tool until the handshake communication between the battery pack and the power tool is successful.

4. The data interaction method according to claim 1, wherein, the battery pack and the power tool respectively comprises at least two communication modes;
performing the handshake communication between the battery pack and the power tool comprises:
the battery pack sending a handshake message to the power tool, and the power tool replying with an agreed message to the battery pack after receiving the handshake message,
determining that the handshake communication between the battery pack and the power tool is successful if the battery pack receives the agreed message within a second preset time, determining that the handshake communication between the battery pack and the power tool fails if the power tool does not receive the handshake message within the second preset time, and
the battery pack or the power tool switching its current communication mode to another communication mode if the handshake communication between the battery pack and the power tool fails, and re-performing the handshake communication between the battery pack and the power tool until the handshake communication between the battery pack and the power tool is successful.

5. The data interaction method according to claim 1, wherein, the battery pack and the power tool respectively comprises at least two communication modes;
performing the handshake communication between the battery pack and the power tool comprises:
the battery pack sending a handshake message to the power tool, and the power tool replying with an agreed message to the battery pack after receiving the handshake message,
determining that the handshake communication between the battery pack and the power tool is successful if the battery pack receives the agreed message replied by the power tool twice in succession and a time interval between two receptions of the agreed message is less than a preset interval, otherwise, determining that the handshake communication between the battery pack and the power tool fails, and
the battery pack or the power tool switching its current communication mode to another communication mode if the handshake communication between the battery pack and the power tool fails, and re-performing the handshake communication between the battery pack and the power tool until the handshake communication between the battery pack and the power tool is successful.

6. The data interaction method according to claim 4 or claim 5, wherein, the battery pack and the power tool transmitting data to each other comprises:
the battery pack transmitting data with the power tool in a communication mode in which the handshake communication is successful; or
the battery pack and the power tool switching the communication mode when handshake communication is successful to another communication mode to transmit data.

7. The data interaction method according to claim 6, wherein, the battery pack and the power tool are respectively provided with at least a single bus communication mode and a serial bus communication mode;
the battery pack and the power tool transmitting data to each other comprises:
the battery pack and the power tool transmitting data to each other through the serial bus communication mode if the battery pack and the power tool successfully perform the handshake communication through the serial bus communication mode, or
the battery pack and the power tool first switching the communication mode from the single bus communication mode to the serial bus communication mode and then performing the data transmission through the serial bus communication mode if the battery pack and the power tool successfully perform the handshake communication through the single bus communication mode.

8. The data interaction method according to claim 1, further comprising: after the data transmission between the battery pack and the power tool is completed, the battery pack and the power tool setting the communication mode to their respective default communication modes.

9. The data interaction method according to claim 1, wherein, when the battery pack and the power tool perform the handshake communication:
the battery pack detects the power tool connected, a first random number is generated, battery pack data and the first random number are encrypted into first handshake information according to a preset key, the first handshake information is output to the power tool;
the battery pack receives second handshake information fed back by the power tool, and the second handshake information is decrypted according to the preset key to obtain power tool data and a second random number; and
the battery pack and the power tool transmitting data to each other comprises:
the battery pack encrypting first original data and the first random number into first data according to a preset first rule, and outputting the first data to the power tool, and
the battery pack receiving second data fed back by the power tool, parsing the second data into second original data according to a preset second rule, and discharging according to the second original data and the power tool data.

10. The data interaction method according to claim 9, wherein, the battery pack encrypting the first original data and the first random number into the first data according to the preset first rule comprises:
the battery pack adding the first random number to the first original data according to a preset order, and
the battery pack encrypting the first original data added with the first random number by using a preset encryption algorithm to obtain the first data.

11. The data interaction method according to claim 10, wherein, the battery pack adding the first random number to the first original data according to the preset order comprises:
the battery pack dividing the first random number into single bytes, and inserting each byte into the first original data according to the preset order.

12. The data interaction method according to claim 10, wherein, the battery pack receiving the second data fed back by the power tool, parsing the second data into the second original data according to the preset second rule comprises:
the battery pack receiving the second data fed back by the power tool, and decrypting the second data into the second original data added with the second random number by using a preset decryption algorithm; and
the battery pack separating the second random number from the second original data according to the preset order to obtain the second original data.

13. The data interaction method according to claim 9, further comprising:
the battery pack saving the second random number into a preset first verification table in a chronological order, and
using the second random number received this time to replace the earliest second random number in the first verification table if an amount of data in the first verification table is greater than a preset first amount.

14. The data interaction method according to claim 13, further comprising:
the battery pack comparing the second random number with the data in the first verification table, considering the connected power tool to be illegally connected and the battery pack disconnecting the communication connection with the power tool if there is same data.

15. The data interaction method according to claim 9, further comprising:
the battery pack comparing the first random number generated with data in a preset second verification table, and regenerating the first random number if there is same data;
otherwise, saving the first random number generated this time into the second verification table in a chronological order, and using the first random number generated this time to replace the earliest first random number in the second verification table if an amount of data in the second verification table is greater than a preset second amount.

16. The data interaction method according to claim 1, wherein, an operation before the battery pack and the power tool transmitting data to each other comprises:
the power tool reading a first array in a memory of the battery pack; and
the power tool verifying the first array, and if the verification is successful, the power tool transmitting data with the battery pack, otherwise, stopping the communication connection with the battery pack;
wherein, the power tool verifying the first array comprises:
the power tool determining whether there is a preset verification character in the first array,
if yes, the power tool intercepting a first key and a first ciphertext in the first array, generating a second ciphertext according to the first key, matching the second ciphertext with the first ciphertext, and considering the verification to be successful if the matching is successful.

17. The data interaction method according to claim 1, wherein, an operation before the battery pack and the power tool transmitting data to each other comprises:
the battery pack pre-storing a first array for verification;
the battery pack receiving a verification request sent by the power tool, and sending the first array to the power tool, wherein the verification request is triggered and sent when the battery pack detects that the power tool is connected; and
the battery pack receiving indication information from the power tool, wherein the indication information is used to indicate to the battery pack whether verification is successful, and if successful, interacting data with the power tool.

18. A data interaction method, applied to interact data between a battery pack and a power tool, wherein, the battery pack and the power tool share a same physical communication channel for communication, the battery pack and the power tool have at least two communication modes respectively;
and the data interaction method comprises:
performing a handshake communication between the battery pack and the power tool through one of the communication modes; and
when the handshake communication between the battery pack and the power tool is successful, the battery pack and the power tool respectively switching the communication mode when the handshake communication is successful to another communication mode.

19. The date interaction method according to claim 18, wherein, the another communication mode has large data transmission capability and high transmission rate.

20. A data interaction system, comprising:
a power tool, and
a battery pack, sharing a same physical communication channel with the power tool for communication; wherein
one of the battery pack and the power tool has at least one communication mode, another of the battery pack and the power tool has at least two communication modes, and communication units corresponding to the communication modes in the battery pack and the power tool are connected to their respective micro-control units;
the power tool and the battery pack are configured to perform data interaction in a following mode:
performing a handshake communication between the battery pack and the power tool;
when the handshake communication between the battery pack and the power tool fails, one of the battery pack and the power tool with two communication modes switching a current communication mode to another communication mode;
re-performing the handshake communication between the battery pack and the power tool until the handshake communication between the battery pack and the power tool succeeds; and
the battery pack and the power tool transmitting data to each other.
